# EUROPEAN PATENT APPLICATION

(11) **EP 4 715 440 A1**
(43) Date of publication of application: **25.03.2026**
(21) Application number: 24896610.3
(22) Date of filing: 27.11.2024
(51) Int. Cl.: G02B 9/64, G02B 13/00

(54) **CAMERA LENS, PROJECTION APPARATUS, DISPLAY APPARATUS, AND VEHICLE**

(30) Priority: 01.12.2023 CN 202311649342
(71) Applicant: Shenzhen Yinwang Intelligent Technologies Co., Ltd., Shenzhen, Guangdong 518110 (CN)
(72) Inventor: MA, Ming, Shenzhen, Guangdong 518129 (CN); CAI, Chunlong, Shenzhen, Guangdong 518129 (CN); CHEN, Hua, Shenzhen, Guangdong 518129 (CN)
(74) Representative: Körber, Martin Hans
(86) International application number: PCT/CN2024/135056
(87) International publication number: WO 2025/113524

(57) **Abstract**

A lens (100), a projection apparatus (400), a display apparatus (500), and a transportation means, and pertain to the field of optical technologies. The lens (100) includes a first lens group (10), an aperture stop (20), and a second lens group (30) that are arranged from an image side to an object side. The first lens group (10) includes at least four lens elements. In a direction from the image side to the object side, a first one, a second one, a third one, a fourth one among the lens elements closest to the image side in the first lens group (10) have a positive focal power, a negative focal power, a negative focal power, and a positive focal power. The second lens group (30) includes at least four lens elements. In the direction from the image side to the object side, a first one, a second one, a third one, a fourth one among the lens elements closest to the aperture stop (20) in the second lens group (30) have a negative focal power, a positive focal power, a positive focal power, and a positive focal power. The lens (30) has high definition and high reliability, and can meet high definition and high reliability requirements for projection.

## Description

This application claims priority to Chinese Patent Application No. 202311649342.1 filed with the China National Intellectual Property Administration on December 1, 2023, and entitled "LENS, PROJECTION APPARATUS, DISPLAY APPARATUS, AND TRANSPORTATION MEANS", which is incorporated herein by reference in its entirety.

### TECHNICAL FIELD

Embodiments of application relate to the field of optical technologies, and in particular, to a lens, a projection apparatus, a display apparatus, and a transportation means.

### BACKGROUND

With development of intelligent vehicle technologies, an augmented display head-up display (AR-HUD) has become a mainstream configuration of an intelligent cockpit of a vehicle. The augmented display head-up display may fuse a to-be-displayed image with a real-time road surface. In this way, a driver can view information such as a traveling speed of the vehicle, navigation, and a traffic light while looking at the road surface, and does not need to look down to view an instrument panel or a central display screen behind a steering wheel. This can greatly shorten braking response time in an emergency and improve driving safety. In a related technology, a vehicle-mounted head-up display includes a projector light engine and a projection lens. The projector light engine modulates to-be-displayed information such as navigation and instrument information into a light beam and emits the light beam to the projection lens. The projection lens projects an image light beam to a projection surface, so that the real-time road surface is fused with the to-be-displayed information. However, definition of an existing projection lens is low.

### SUMMARY

Embodiments of this application provide a lens, a projection apparatus, a display apparatus, and a transportation means, to improve definition of the lens.

A first aspect of this application provides a lens, including a first lens group, an aperture stop, and a second lens group that are arranged from an image side to an object side. The first lens group includes at least four lens elements. In a direction from the image side to the object side, a first one, a second one, a third one, and a fourth one among the lens elements closest to the image side in the first lens group have a positive focal power, a negative focal power, a negative focal power, and a positive focal power, respectively. The second lens group includes at least four lens elements. In the direction from the image side to the object side, a first one, a second one, a third one, and a fourth one among the lens elements closest to the aperture stop in the second lens group have a negative focal power, a positive focal power, a positive focal power, and a positive focal power, respectively.

A focal power architecture of the four lens elements closest to the image side in the first lens group is a positive-negative-negative-positive architecture, and a focal power architecture of the four lens elements closest to the aperture stop in the second lens group is a negative-positive-positive-positive architecture. Therefore, an imaging capability of the lens can be improved, and definition of the lens can be further improved, which meets a high definition requirement for the lens. In addition, reliability of the lens may be further improved, which meets a high reliability requirement for the lens.

In a possible implementation, the lens satisfies a relational expression 13.5 mm≤EFL≤14.5 mm. EFL represents a focal length of the lens.

When the focal length of the lens is between 13.5 mm and 14.5 mm, the imaging capability of the lens can be further improved, and the definition of the lens can be further improved.

In a possible implementation, the lens satisfies a relational expression 115 mm≤L≤150 mm. In the direction from the image side to the object side, L represents a distance between an image and the lens element closest to the image side in the lens.

When the distance between the image and the lens element closest to the image side in the lens is between 115 mm and 150 mm, the definition can be further improved, which meets the high definition requirement for the lens.

In a possible implementation, the first lens group satisfies a relational expression -58 mm≤EFL 1≤-40 mm. EFL 1 represents a focal length of the first lens group.

When the focal length of the first lens group is between -58 mm and -40 mm, the imaging capability of the lens can be further improved, and the definition can be further improved. In addition, compactness of the lens can be further improved.

In a possible implementation, the lens satisfies a relational expression 2≤R1/EFL≤5. R1 represents a curvature radius of an image-side surface of the lens element closest to the image side in the lens, and EFL represents the focal length of the lens.

When a ratio of the curvature radius of the image-side surface of the lens element closest to the image side in the lens to the focal length of the lens is between 2 and 5, an excessively flat image-side surface of the lens element closest to the image side in the lens can be avoided, which facilitates aberration correction. In addition, an excessively protruding image-side surface of the lens element closest to the image side in the lens can be further avoided, which facilitates packaging, transportation, or assembly.

In a possible implementation, the lens satisfies a relational expression 26 mm≤R1≤70 mm. R1 represents the curvature radius of the image-side surface of the lens element closest to the image side in the lens.

When the curvature radius of the image-side surface of the lens element closest to the image side in the lens is between 26 mm and 70 mm, the excessively flat image-side surface of the lens element closest to the image side in the lens can be avoided, which facilitates aberration correction. In addition, the excessively protruding image-side surface of the lens element closest to the image side in the lens can be further avoided, which facilitates packaging, transportation, or assembly.

In a possible implementation, the second lens group satisfies a relational expression 19 mm≤EFL 2≤25 mm. EFL 2 represents a focal length of the second lens group.

When the focal length of the second lens group is between 19 mm and 25 mm, the imaging capability of the lens can be further improved, and the definition can be further improved. In addition, compactness of the lens can be further improved. In addition, a matching degree between a chief ray angle of a back-end chip (for example, a projection chip) and a chief ray angle of the lens may be further improved, which improves optical efficiency.

In a possible implementation, the lens satisfies a relational expression -10≤R2/EFL≤-3. R2 represents a curvature radius of an object-side surface of a lens element closest to the object side in the lens, and EFL represents the focal length of the lens.

When a ratio of the curvature radius of the object-side surface of the lens element closest to the object side in the lens to the focal length of the lens is between -10 and -3, an excessively flat object-side surface of the lens element closest to the object side in the lens can be avoided, which facilitates aberration correction. In addition, an excessively protruding object-side surface of the lens element closest to the object side in the lens, which facilitates packaging, transportation, or assembly.

In a possible implementation, the lens satisfies a relational expression -140 mm≤R2≤-50 mm. R2 represents the curvature radius of the object-side surface of the lens element closest to the object side in the lens.

When the curvature radius of the object-side surface of the lens element closest to the object side in the lens is between -140 mm and -50 mm, the excessively flat object-side surface of the lens element closest to the object side in the lens can be avoided, which facilitates aberration correction. In addition, the excessively protruding object-side surface of the lens element closest to the object side in the lens can be further avoided, which facilitates packaging, transportation, or assembly.

In a possible implementation, the lens satisfies a relational expression 28 mm≤BFL≤33 mm. BFL represents a back focal length of the lens.

When the back focal length of the lens is between 28 mm and 33 mm, an excessively long or excessively short optical path of the lens can be avoided, which can increase an application range of the lens. The excessively long optical path of the lens is not conducive to a design. The excessively short optical path of the lens is not conducive to setting a back-end optical path.

In a possible implementation, the first lens group includes a first lens element having a positive focal power, a second lens element having a negative focal power, a third lens element having a negative focal power, and a fourth lens element having a positive focal power that are arranged from the image side to the object side. The first lens element is closest to the image side, and the fourth lens element is closest to the aperture stop. The second lens group includes a fifth lens element having a negative focal power, a sixth lens element having a positive focal power, a seventh lens element having a positive focal power, and an eighth lens element having a positive focal power that are arranged from the image side to the object side. The fifth lens element is closest to the aperture stop, and the eighth lens element is closest to the object side.

When the first lens group includes the first lens element having the positive focal power, the second lens element having the negative focal power, the third lens element having the negative focal power, and the fourth lens element having the positive focal power, and the second lens group includes the fifth lens element having the negative focal power, the sixth lens element having the positive focal power, the seventh lens element having the positive focal power, and the eighth lens element having the positive focal power, the imaging capability of the lens can be improved, which meets the high definition and high reliability requirements for the lens. In addition, a quantity of lens elements can be further reduced, which reduces costs of the lens.

A second aspect of this application provides a projection apparatus, including a display unit and the lens according to any implementation of the first aspect. The second lens group of the lens is close to the display unit. The display unit is configured to emit image light to the lens.

A third aspect of this application provides a display apparatus, including an imaging module and the projection apparatus according to the second aspect. The imaging module generates a target image based on the image light emitted by the projection apparatus.

A fourth aspect of this application provides a transportation means, including the display apparatus according to the third aspect.

In a possible implementation, the display apparatus is mounted in an instrument panel of the transportation means.

In a possible implementation, the transportation means further includes a windshield. The image light emitted by the display apparatus is incident to the windshield, and the windshield reflects the image light to human eyes.

### BRIEF DESCRIPTION OF DRAWINGS

FIG. 1A is a diagram of a structure of a use scenario of a display apparatus according to an embodiment of this application;
FIG. 1B is a diagram of a structure of a display apparatus mounted in a transportation means according to an embodiment of this application;
FIG. 2 is a diagram of a structure of a lens according to an embodiment of this application;
FIG. 3 is a diagram of a structure of a first projection apparatus according to Embodiment 1 of this application;
FIG. 4 is a spherical aberration and chromatic aberration diagram of a lens in FIG. 3;
FIG. 5 is an astigmatic field curvature diagram of a lens in FIG. 3;
FIG. 6 is a distortion diagram of a lens in FIG. 4;
FIG. 7 is a diagram of a structure of a second projection apparatus according to Embodiment 2 of this application;
FIG. 8 is a spherical aberration and chromatic aberration diagram of a lens in FIG. 7;
FIG. 9 is an astigmatic field curvature diagram of a lens in FIG. 7;
FIG. 10 is a distortion diagram of a lens in FIG. 7;
FIG. 11 is a diagram of a structure of a third projection apparatus according to Embodiment 3 of this application;
FIG. 12 is a spherical aberration and chromatic aberration diagram of a lens in FIG. 11;
FIG. 13 is an astigmatic field curvature diagram of a lens in FIG. 11;
FIG. 14 is a distortion diagram of a lens in FIG. 11;
FIG. 15 is a diagram of a structure of a fourth projection apparatus according to Embodiment 4 of this application;
FIG. 16 is a spherical aberration and chromatic aberration diagram of a lens in FIG. 15;
FIG. 17 is an astigmatic field curvature diagram of a lens in FIG. 15;
FIG. 18 is a distortion diagram of a lens in FIG. 15;
FIG. 19 is a diagram of a structure of a fifth projection apparatus according to Embodiment 5 of this application;
FIG. 20 is a spherical aberration and chromatic aberration diagram of a lens in FIG. 19;
FIG. 21 is an astigmatic field curvature diagram of a lens in FIG. 19; and
FIG. 22 is a distortion diagram of a lens in FIG. 19.

### Reference numerals:

100: lens;
10: first lens group; 11: first lens element; 12: second lens element; 13: third lens element; 14: fourth lens element;
20: aperture stop;
30: second lens group; 31: fifth lens element; 32: sixth lens element; 33: seventh lens element; 34: eighth lens element;
200: modulation unit;
300: cover glass;
400: projection apparatus;
500: display apparatus;
600: imaging module;
700: display unit; 710: light source.

### DESCRIPTION OF EMBODIMENTS

Terms used in implementations of this application are merely used to explain specific embodiments of this application, but are not intended to limit this application.

For ease of understanding, related technical terms in embodiments of this application are first explained and described.

A focal length, also referred to as a focal length, is a measurement manner for measuring convergence or divergence of light in an optical system, and means a vertical distance from an optical center of a lens or a lens group to a focal plane when a clear image of an infinite scene is formed on the focal plane through the lens or the lens group.

An image side, bounded by a lens, is a side on which an image is located. A surface facing the image side of a lens element is an image-side surface of the lens element.

An object side is a side on which a modulation unit is located. A surface facing the object side of a lens element is an object-side surface of the lens element.

A back focal length (back focal length, BFL for short) is defined as a distance from a lens element closest to an imaging plane in a lens to a modulation unit.

A focal power represents a refraction capability of a lens element on an incident parallel light beam.

A positive focal power represents that a lens element has a positive focal length and has effect of converging light.

A negative focal power represents that a lens element has a negative focal length and has effect of diverging light.

An aperture stop is an apparatus configured to control an amount of light passing through a lens and entering the interior of an electronic device, and is usually in the lens. A size of the aperture stop is represented by an F# (F-number) value.

An F-number F# is a relative value (reciprocal of a relative aperture stop) obtained by dividing a focal length of a lens by a light transmission diameter of the lens. A smaller value of the F-number F# indicates a larger amount of light that enters the lens in a same unit of time.

Cover glass (cover glass, CG) is configured to protect a modulation unit.

A modulation unit is configured to modulate a light beam emitted by a light source, to generate image light emitted to a lens.

A projection chip is configured to modulate a light beam emitted by a light source, to generate image light emitted to a lens.

A digital micromirror device (digital micromirror devices, DMD) is configured to reflect light to form an image.

A liquid crystal on silicon (liquid crystal on silicon, LCOS) is used to reflect light to form an image.

A micro-electro-mechanical system (micro-electro-mechanical system, MEMS) may reflect light to form an image.

An axial chromatic aberration is also referred to as a longitudinal chromatic aberration or a position chromatic aberration. After passing through a lens, a beam of light parallel to an optical axis is converged at different positions. The aberration is referred to as the positional chromatic aberration or the axial chromatic aberration. This is because positions of images formed by the lens for light of different wavelengths are different. As a result, imaging planes for images of light of different colors cannot overlap during final imaging, and dispersion is formed by divergence of polychromatic light.

Distortion (distortion), also referred to as distortion, is a degree at which an image formed by an optical system for an object is distorted relative to the object. Distortion is caused because a height of a point at which chief rays with different fields of view intersect a Gaussian image plane after the chief rays pass through the optical system is not equal to an ideal image height due to impact of an aperture stop spherical aberration, and a difference between the two heights is distortion. Therefore, distortion only changes an imaging position of an off-axis object point on an ideal plane, so that a shape of an image is distorted, but definition of the image is not affected.

An augmented reality (AR) head-up display (AR-HUD) proposed in recent years can fuse AR effect projected and displayed by the HUD with real road surface information, to enhance obtaining of the road surface information by a driver, and implement functions such as AR navigation and AR warning. In a related technology, the augmented display head-up display includes a projector light engine and a projection lens. The projector light engine is configured to modulate to-be-displayed information such as navigation and instrument information into an imaging light beam and emits the imaging light beam to the projection lens. The projection lens projects the imaging light beam to a projection surface to form an image, so that the real-time road surface is fused with the to-be-displayed information. However, an existing projection lens has problems such as low definition and low reliability, which results in poor imaging quality and cannot meet high definition and high reliability requirements for projection.

In view of this, embodiments of this application provide a lens 100, a projection apparatus 400, a display apparatus 500, and a transportation means. The lens 100 has a strong imaging capability, and can improve image definition, which meets the high definition requirement for projection. In addition, the lens 100 has high reliability, and can meet the high reliability requirement for projection.

The transportation means provided in this embodiment of this application may include but is not limited to a car, a truck, a motorcycle, a bus, a boat, an airplane, a helicopter, a lawn mower, a recreational vehicle, a playground vehicle, a construction device, a trolley, a golf cart, a train, a handcart, or the like. For example, in this embodiment of this application, an example in which the car is the transportation means is used for description. Therefore, the transportation means may include parts such as a windshield and an instrument panel.

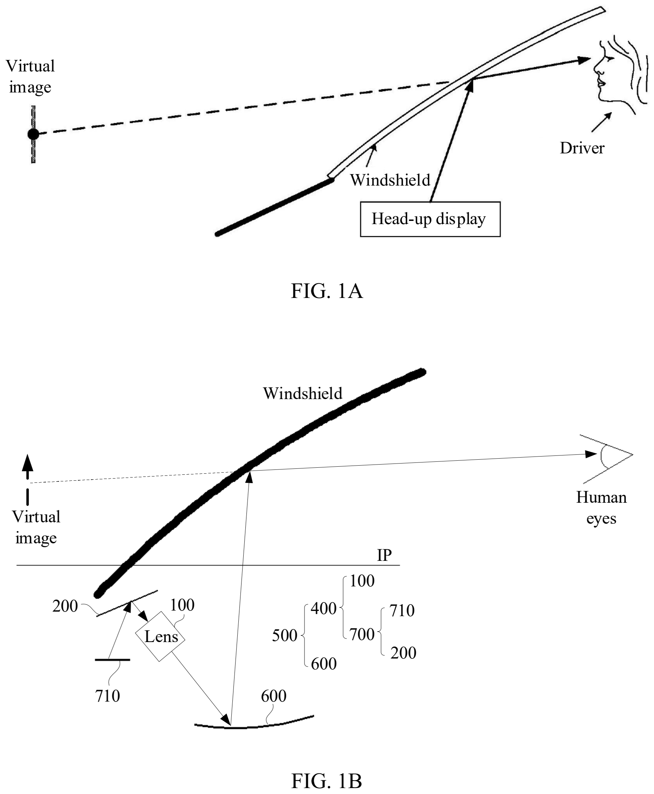

The display apparatus 500 provided in this embodiment of this application may be a display, a television, a head-up display, or the like. For example, in this embodiment of this application, an example in which the display apparatus 500 is the head-up display is used for description. FIG. 1A is a diagram of a structure of a use scenario of the display apparatus according to an embodiment of this application. The head-up display (HUD for short) can project navigation information, instrument information, and the like into a driver's front field of view, to prevent the driver from looking down to view the information, which affects driving safety. After an image projected by the HUD is reflected by a windshield (windshield), a virtual image is formed outside the transportation means. The virtual image can be superimposed on a real environment outside the transportation means, allowing the driver to obtain augmented reality (augmented reality, AR) visual effect. This achieves functions such AR navigation, adaptive cruise control, and lane departure warning. Types of the HUD include but are not limited to a windshield (windshield, W)-HUD, augmented reality head-up display (AR-HUD), and the like.

FIG. 1B is a diagram of a structure of the display apparatus mounted in the transportation means according to an embodiment of this application.

With reference to FIG. 1B, the display apparatus 500 may be mounted in an instrument panel of the transportation means, to achieve concealed mounting. In addition, image light emitted by the display apparatus 500 may be incident to the windshield, and the windshield may reflect the image light to human eyes, so that the human eyes can view a virtual image located outside the windshield.

Still with reference to FIG. 1B, the display apparatus 500 may include a projection apparatus 400 and an imaging module 600. The imaging module 600 may generate a target image based on image light emitted by the projection apparatus 400.

The imaging module 600 may reflect, to the windshield, the image light emitted by the projection apparatus 400, and the windshield reflects the image light to human eyes, to form the target image.

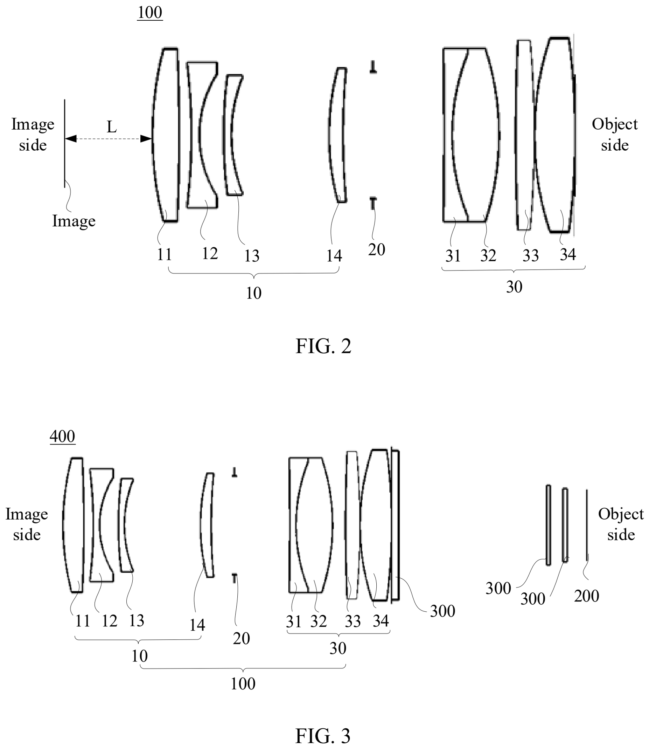

A specific structure of the imaging module 600 is not limited herein. For example, as shown in FIG. 2, the imaging module 600 may include a curved-surface mirror. The curved-surface mirror is configured to reflect, to the windshield, the image light emitted by the projection apparatus 400, and the windshield may reflect the image light to human eyes. In addition, because a concave surface of the curved-surface mirror may reflect imaging light, an image generated by the projection apparatus 400 may be magnified by the curved-surface mirror, and a user may view a magnified virtual image.

With reference to FIG. 1B, the projection apparatus 400 may include a display unit 700 and a lens 100. The display unit 700 is configured to emit image light to the lens 100, and the lens transmits the image light to the imaging module 600.

The display unit 700 may include a light source 710 and a modulation unit 200. The light source 710 is configured to generate a light beam that carries image data of an input image. The modulation unit 200 is configured to: modulate, based on the image data, the light beam generated by the light source 710, and generate image light emitted to the lens 100.

A specific structure of the modulation unit 200 is not limited herein. For example, the modulation unit 200 may be a projection chip. The projection chip may be a reflective spatial light modulator and has a function of changing a polarization direction of incident linearly polarized light. For example, is an LCoS. Alternatively, the projection chip may be a reflective spatial light modulator, but does not have a function of changing a polarization direction of incident linearly polarized light. For example, is an MEMS or a DMD. Alternatively, the projection chip may be a transmissive spatial light modulator, for example, is an LCD.

In some possible implementations, the projection apparatus 400 may further include cover glass 300. The cover glass 300 is disposed between the lens 100 and the modulation unit 200 in a direction from an image side to an object side, and the cover glass 300 may protect the modulation unit 200. There may be one or more pieces of cover glass 300. This is not limited herein. When there are a plurality of pieces of cover glass 300, all the pieces of cover glass 300 are disposed between the modulation unit 200 and the lens 100.

With reference to the accompanying drawings, the following describes in detail the lens 100 provided in embodiments of this application.

FIG. 2 is a diagram of a structure of the lens according to an embodiment of this application. With reference to FIG. 2, the lens 100 in this embodiment of this application includes a first lens group 10, an aperture stop 20, and a second lens group 30 that are arranged from an image side to an object side. The first lens group 10 is close to the image side, and the second lens group 30 is close to the object side. The first lens group 10 includes at least four lens elements. For example, as shown in FIG. 2, the first lens group 10 may include four lens elements. Certainly, there may alternatively be more than four lens elements in the first lens group 10. In a direction from the image side to the object side, a first one, a second one, a third one, a fourth one among the lens elements closest to the image side in the first lens group 10 have a positive focal power, a negative focal power, a negative focal power, and a positive focal power, respectively. The second lens group 30 includes at least four lens elements. For example, as shown in FIG. 2, the second lens group 30 may include four lens elements. Certainly, there may alternatively be more or fewer than four lens elements in the second lens group 30. In the direction from the image side to the object side, a first one, a second one, a third one, a fourth one among the lens elements closest to the aperture stop 20 in the second lens group 30 have a negative focal power, a positive focal power, a positive focal power, and a positive focal power, respectively.

With reference to FIG. 2, it can be learned that a focal power architecture of the four lens elements closest to the image side in the first lens group 10 is a positive-negative-negative-positive architecture, and a focal power architecture of the four lens elements closest to the aperture stop 20 in the second lens group 30 is a negative-positive-positive-positive architecture. Therefore, an imaging capability of the lens 100 can be improved, and definition of the lens 100 can be further improved, which meets a high definition requirement for the lens 100. In addition, reliability of the lens 100 may be further improved, which meets a high reliability requirement for the lens 100.

The quantity of lens elements in the first lens group 10 and the quantity of lens elements in the second lens group 30 are not limited herein. For example, as shown in FIG. 2, both the first lens group 10 and the second lens group 30 include four lens elements. The first lens group 10 may include a first lens element 11 having a positive focal power, a second lens element 12 having a negative focal power, a third lens element 13 having a negative focal power, and a fourth lens element 14 having a positive focal power that are arranged from the image side to the object side. The first lens element 11 is closest to the image side, and the fourth lens element 14 is closest to the aperture stop 20. The second lens group 30 may include a fifth lens element 31 having a negative focal power, a sixth lens element 32 having a positive focal power, a seventh lens element 33 having a positive focal power, and an eighth lens element 34 having a positive focal power that are arranged from the image side to the object side. The fifth lens element 31 is closest to the aperture stop 20, and the eighth lens element 34 is closest to the object side.

When the first lens group 10 includes the first lens element 11 having the positive focal power, the second lens element 12 having the negative focal power, the third lens element 13 having the negative focal power, and the fourth lens element 14 having the positive focal power, and the second lens group 30 includes the fifth lens element 31 having the negative focal power, the sixth lens element 32 having the positive focal power, the seventh lens element 33 having the positive focal power, and the eighth lens element 34 having the positive focal power, the lens 100 includes eight lens elements, and the eight lens elements and the aperture stop 20 form an architecture with four front lens elements and four rear lens elements. This can improve an imaging capability of the lens 100, which meets the high definition and high reliability requirements for the lens 100. In addition, a quantity of lens elements can be further reduced, which reduces costs of the lens 100.

It should be noted that when there are at least five lens elements in the first lens group 10, a lens element, other than the four lens elements closest to the image side in the first lens group 10, in the first lens group 10 is disposed between the aperture stop 20 and the fourth one among the lens elements closest to the image side, that is, disposed between the aperture stop 20 and the fourth lens element 14. Similarly, when there are at least five lens elements in the second lens group 30, a lens element, other than the four lens elements closest to the aperture stop 20 in the second lens group 30, in the second lens group 30 is disposed between the object side (or the modulation unit 200) and the fourth one among the lens elements closest to the aperture stop 20, that is, disposed between the object side (or the modulation unit 200) and the eighth lens element 34.

In some possible implementations, the lens 100 may further satisfy a relational expression 13.5 mm≤EFL≤14.5 mm. EFL represents a focal length of the lens 100.

Correspondingly, when the focal length of the lens 100 is between 13.5 mm and 14.5 mm, the imaging capability of the lens 100 can be further improved, and the definition of the lens 100 can be further improved.

A specific value of the focal length of the lens 100 is not limited herein. The focal length of the lens 100 may be 13.5 mm, 13.6 mm, 13.99 mm, 14.0 mm, 14.1 mm, 14.2 mm, 14.3 mm, 14.4 mm, 14.5 mm, or the like.

In some possible implementations, the lens 100 may further satisfy a relational expression 115 mm≤L≤150 mm. In the direction from the image side to the object side, L represents a distance (represented by L in FIG. 2) between an image and a lens element closest to the image side in the lens 100.

Correspondingly, when the distance between the image and the lens element closest to the image side in the lens 100 is between 115 mm and 150 mm, the definition can be further improved, which meets the high definition requirement for the lens 100.

A specific value of L is not limited herein. L may be 115 mm, 120 mm, 121 mm, 125 mm, 128 mm, 130 mm, 131.5 mm, 135 mm, 139 mm, 140 mm, 143 mm, 145.5 mm, 148 mm, 150 mm, or the like.

In some possible implementations, the first lens group 10 may further satisfy a relational expression -58 mm≤EFL 1≤-40 mm. EFL 1 represents a focal length of the first lens group 10.

Correspondingly, when the focal length of the first lens group 10 is between -58 mm and -40 mm, the imaging capability of the lens 100 can be further improved, and the definition can be further improved. In addition, compactness of the lens 100 can be further improved.

A specific value of the focal length of the first lens group 10 is not limited herein. The focal length of the first lens group 10 may be -58 mm, -57.985 mm, -57.5 mm, -55 mm, -53.6998 mm, -50 mm, -49 mm, -48 mm, -47.5 mm, -47 mm, -46 mm, -45 mm, -44 mm, -43.68 mm, - 42 mm, -41.5 mm, -41.35 mm, -40 mm, or the like.

In some possible implementations, the lens 100 may further satisfy a relational expression 2≤R1/EFL≤5. R1 represents a curvature radius of an image-side surface of the lens element closest to the image side in the lens 100, and EFL represents the focal length of the lens 100.

Correspondingly, when a ratio of the curvature radius of the image-side surface of the lens element closest to the image side in the lens 100 to the focal length of the lens 100 is between 2 and 5, an excessively flat image-side surface of the lens element closest to the image side in the lens 100 can be avoided, which facilitates aberration correction. In addition, an excessively protruding image-side surface of the lens element closest to the image side in the lens 100 can be further avoided, which facilitates packaging, transportation, or assembly.

A specific ratio of R1/EFL is not limited herein. The ratio of R1/EFL may be 2, 2.5, 2.8, 3, 3.1, 3.5, 3.987, 4, 4.1, 4.5, 4.9, 5, or the like.

In some possible implementations, the lens 100 may further satisfy a relational expression 26 mm≤R1≤70 mm. R1 represents the curvature radius of the image-side surface of the lens element closest to the image side in the lens 100.

Correspondingly, when the curvature radius of the image-side surface of the lens element closest to the image side in the lens 100 is between 26 mm and 70 mm, the excessively flat image-side surface of the lens element closest to the image side in the lens 100 can be avoided, which facilitates aberration correction. In addition, the excessively protruding image-side surface of the lens element closest to the image side in the lens 100 can be further avoided, which facilitates packaging, transportation, or assembly.

A specific value of R1 is not limited herein. The value of R1 may be 26 mm, 30 mm, 35 mm, 40 mm, 45 mm, 50 mm, 55 mm, 60 mm, 61.698 mm, 65 mm, 66 mm, 69 mm, 70 mm, or the like.

In some possible implementations, the second lens group 30 may further satisfy a relational expression 19 mm≤EFL 2≤25 mm. EFL 2 represents a focal length of the second lens group 30.

Correspondingly, when the focal length of the second lens group 30 is between 19 mm and 25 mm, the imaging capability of the lens 100 can be further improved, and the definition can be further improved. In addition, compactness of the lens 100 can be further improved. In addition, a matching degree between a chief ray angle of a back-end chip and a chief ray angle of the lens 100 may be further improved, which improves optical efficiency. The back-end chip is the modulation unit 200 closest to the second lens group 30.

A specific value of the focal length of the first lens group 10 is not limited herein. The focal length of the second lens group 30 may be 19 mm, 19.5 mm, 20 mm, 21.5 mm, 22 mm, 22.5 mm, 23 mm, 23.509 mm, 24 mm, 24.5 mm, 25 mm, 25.5 mm, 26 mm, or the like.

In some possible implementations, the lens 100 may further satisfy a relational expression -10≤R2/EFL≤-3. R2 represents a curvature radius of an object-side surface of a lens element closest to the object side in the lens 100, and EFL represents the focal length of the lens 100.

Correspondingly, when a ratio of the curvature radius of the object-side surface of the lens element closest to the object side in the lens 100 to the focal length of the lens 100 is between -10 and -3, an excessively flat object-side surface of the lens element closest to the object side in the lens 100 can be avoided, which facilitates aberration correction. In addition, an excessively protruding object-side surface of the lens element closest to the object side in the lens 100 can be further avoided, which facilitates packaging, transportation, or assembly.

A specific ratio of R2/EFL is not limited herein. The ratio of R2/EFL may be -10, -9.5, -9, -8, -8.5, -8, -7.5, -7, -6.5, -6, -5.5, -5, -4.5, -4, -3.5, -3, or the like.

In some possible implementations, the lens 100 may further satisfy a relational expression -140 mm≤R2≤-50 mm. R2 represents the curvature radius of the object-side surface of the lens element closest to the object side in the lens 100.

Correspondingly, when the curvature radius of the object-side surface of the lens element closest to the object side in the lens 100 is between -140 mm and -50 mm, an excessively flat object-side surface of the lens element closest to the object side in the lens 100 can be avoided, which facilitates aberration correction. In addition, an excessively protruding object-side surface of the lens element closest to the object side in the lens 100 can be further avoided, which facilitates packaging, transportation, or assembly.

A specific value of R2 is not limited herein. The value of R2 may be -140 mm, -135 mm, -130 mm, -125 mm, -120 mm, -115 mm, -110 mm, -105 mm, -100 mm, -95 mm, -90 mm, -85 mm, -80 mm, -75 mm, -70 mm, -65 mm, -60 mm, -55 mm, -50 mm, or the like.

In some possible implementations, the lens 100 may further satisfy a relational expression 28 mm≤BFL≤33 mm. BFL represents a back focal length of the lens 100.

Correspondingly, when the back focal length of the lens 100 is between 28 mm and 33 mm, an excessively long or excessively short optical path of the lens 100 can be avoided, which can increase an application range of the lens 100. The excessively long optical path of the lens 100 is not conducive to a design. The excessively short optical path of the lens 100 is not conducive to setting a back-end optical path.

A specific value of the back focal length of the lens 100 is not limited herein. The focal length of the lens 100 may be 28 mm, 28.6 mm, 29 mm, 29.5 mm, 29.887 mm, 30 mm, 30.5 mm, 31 mm, 31.5 mm, 32 mm, 32.5 mm, 33 mm, or the like.

The following describes in detail the lens 100 and the projection apparatus 400 provided in embodiments of this application by using specific embodiments.

FIG. 3 is a diagram of a structure of a first projection apparatus according to Embodiment 1 of this application.

With reference to FIG. 3, it can be learned that the projection apparatus 400 provided in Embodiment 1 may include a modulation unit 200, cover glass 300, and the lens 100. The lens 100 includes a first lens group 10, an aperture stop 20, and a second lens group 30 that are arranged from an image side to an object side. In a direction from the image side to the object side, the second lens group 30 is disposed between the aperture stop 20 and the modulation unit 200, and the cover glass 300 is disposed between the modulation unit 200 and the lens 100. There are three pieces of cover glass 300, and the three pieces of cover glass 300 are spaced apart in the direction from the image side to the object side.

With reference to FIG. 3, it can be learned that the first lens group 10 may include a first lens element 11, a second lens element 12, a third lens element 13, and a fourth lens element 14 that are sequentially arranged from the image side to the object side. The first lens element 11 is closest to the image side, and the fourth lens element 14 is closest to the aperture stop 20. The first lens element 11 has a positive focal power, and a focal length f1 of the first lens element 11 is 33.05. The second lens element 12 has a negative focal power, and a focal length f2 of the second lens element 12 is -17.32. The third lens element 13 has a negative focal power, and a focal length f3 of the third lens element 13 is -35.85. The fourth lens element 14 has a positive focal power, and a focal length f4 of the fourth lens element 14 is 54.67.

With reference to FIG. 3, it can be learned that the second lens group 30 may include a fifth lens element 31, a sixth lens element 32, a seventh lens element 33, and an eighth lens element 34 that are sequentially arranged from the image side to the object side. The fifth lens element 31 is closest to the aperture stop 20, the fifth lens element 31 and the sixth lens element 32 form a glued lens, and the eighth lens element 34 is closest to the modulation unit 200. The fifth lens element 31 has a negative focal power, the sixth lens element 32 has a positive focal power, and the glued lens formed by the fifth lens element 31 and the sixth lens element 32 has a positive focal power. A focal length f56 of the glued lens is 438.89. The seventh lens element 33 has a positive focal power, and a focal length f7 of the seventh lens element 33 is 101.32. The eighth lens element 34 has a positive focal power, and a focal length f8 of the eighth lens element 34 is 35.1757.

A lens element closest to the image side in the lens 100 is the first lens element 11, and a curvature radius of an image-side surface of the first lens element 11 is 32.67 mm, which is greater than 26 mm and less than 70 mm, and meets a requirement. A ratio R1/EFL of the curvature radius R1 of the image-side surface of the first lens element 11 to a focal length EFL of the lens 100 is 2.099, which is greater than 2 and less than 5, and meets a requirement. A focal length EFL 1 of the first lens group 10 is -46.327 mm, which is greater than -58 mm and less than -40 mm, and meets a requirement.

A lens element closest to the object side in the lens 100 is the eighth lens element 34, and a curvature radius of an object-side surface of the eighth lens element 34 is -70.84 mm, which is greater than -140 mm and less than -50 mm, and meets a requirement. A ratio R2/EFL of the curvature radius R2 of the object-side surface of the eighth lens element 34 to the focal length EFL of the lens 100 is -4.55, which is greater than -10 and less than -3, and meets a requirement. A focal length EFL 2 of the second lens group 30 is 23.11 mm, which is greater than 19 mm and less than 25 mm, and meets a requirement.

In the direction from the image side to the object side, a distance between the modulation unit 200 and the object-side surface of the eighth lens element 34 is 30.81 mm. That is, a back focal length BFL of the lens 100 is 30.81 mm, which is greater than 28 mm and less than 33 mm, and meets a requirement.

The focal length EFL of the lens 100 is 14.2 mm, which is greater than 13.5 mm and less than 14.5 mm, and meets a requirement.

**Table 1 lists optical parameters of each optical element in the first projection apparatus 400 provided in Embodiment 1 of this application.**

| Surface number | Surface profile | R (mm) | TH (mm) | Nd | Vd |
|---|---|---|---|---|---|
| OBJ | Spherical | Infinity | 140.323 | | |
| S1 | Spherical | 32.670 | 3.280 | 1.835 | 42.73 |
| S2 | Spherical | -174.860 | 1.490 | | |
| S3 | Spherical | -84.870 | 0.990 | 1.6 | 60.6 |
| S4 | Spherical | 12.010 | 3.030 | | |
| S5 | Spherical | 29.840 | 0.970 | 1.67 | 48.4 |
| S6 | Spherical | 13.130 | 11.780 | | |
| S7 | Spherical | 26.990 | 2.550 | 1.85 | 23.8 |
| S8 | Spherical | 61.180 | 3.140 | | |
| S9 | Spherical | Infinity | 10.520 | | |
| S10 | Spherical | -150.030 | 0.910 | 2 | 25.5 |
| S11 | Spherical | 26.080 | 5.850 | 1.59 | 68.34 |
| S12 | Spherical | -25.900 | 0.080 | | |
| S13 | Spherical | 216.190 | 2.250 | 1.7 | 56.18 |
| S14 | Spherical | -104.980 | 0.040 | | |
| S15 | Spherical | 29.610 | 4.990 | 1.6 | 65.5 |
| S16 | Spherical | -70.840 | 0.000 | | |
| S17 | Spherical | Infinity | 0.000 | | |
| S18 | Spherical | Infinity | 1.100 | 1.5 | 63.4 |
| S19 | Spherical | Infinity | 23.400 | | |
| S20 | Spherical | Infinity | 0.550 | 1.5 | 63.4 |
| S21 | | Infinity | 2.000 | | |
| S22 | | Infinity | 0.700 | 1.52 | 62 |
| S23 | | Infinity | 3.059 | 1.835 | 42.73 |
| ImgH | | Infinity | 0.000 | | |

S1 represents the image-side surface of the first lens element 11; S2 represents an object-side surface of the first lens element 11; S3 represents an image-side surface of the second lens element 12; S4 represents an object-side surface of the second lens element 12; S5 represents an image-side surface of the third lens element 13; S6 represents an object-side surface of the third lens element 13; S7 represents an image-side surface of the fourth lens element 14; S8 represents an object-side surface of the fourth lens element 14; S9 represents the aperture stop 20; S10 represents an image-side surface of the fifth lens element 31; S11 represents a surface on which the fifth lens element 31 and the sixth lens element 32 are glued; S12 represents an object-side surface of the sixth lens element 32; S13 represents an image-side surface of the seventh lens element 33; S14 represents an object-side surface of the seventh lens element 33; S15 represents the image-side surface of the eighth lens element 34; S16 represents an object-side surface of the eighth lens element 34; S17 represents an image-side surface of a first piece of cover glass 300 close to the lens 100; S18 represents an object-side surface of the first piece of cover glass 300 close to the lens 100; S19 represents an image-side surface of a second piece of cover glass 300 close to the lens 100; S20 represents an object-side surface of the second piece of cover glass 300 close to the lens 100; S21 represents an image-side surface of a third piece of cover glass 300 close to the lens 100; S22 represents an object-side surface of the third piece of cover glass 300 close to the lens 100; S23 represents the modulation unit 200; OBJ represents a projection surface (object surface); and ImgH represents an imaging plane.

R represents a curvature radius of an optical element (for example, a lens element or the cover glass 300) at a corresponding position on an optical axis; TH represents a surface thickness of the optical element in a direction of the optical axis; Nd represents a refractive index of each optical element irradiated by a d line; and Vd represents an Abbe number of an optical element.

**Table 2 lists optical parameters of the lens 100 in FIG. 3.**

| | | | |
|---|---|---|---|
| f1 (mm) | 33.049 | R1/EFL | 2.099 |
| f2 (mm) | -17.317 | R2/EFL | -4.55 |
| f3 (mm) | -35.848 | EFL 1 | -46.327 |
| f4 (mm) | 54.665 | EFL 2 | 23.11 |
| f56 (mm) | 438.890 | EFL (mm) | 14.2 |
| f7 (mm) | 101.322 | Fno | 1.7 |
| f8 (mm) | 35.176 | BFL (mm) | 30.81 |

EFL represents the focal length of the lens 100; EFL 1 represents the focal length of the first lens group 10; EFL 2 represents the focal length of the second lens group 30; Fno represents an aperture stop of the lens 100; BFL represents the back focal length of the lens 100; R1 represents the curvature radius of the image-side surface of the lens element closest to the image side in the lens 100; R2 represents the curvature radius of the object-side surface of the lens element closest to the object side in the lens 100; f1 represents the focal length of the first lens element 11; f2 represents the focal length of the second lens element 12; f3 represents the focal length of the third lens element 13; f4 represents the focal length of the fourth lens element 14; f56 represents the focal length of the glued lens formed by the fifth lens element 31 and the sixth lens element 3; f7 represents the focal length of the seventh lens element 33; and f8 represents the focal length of the eighth lens element 34.

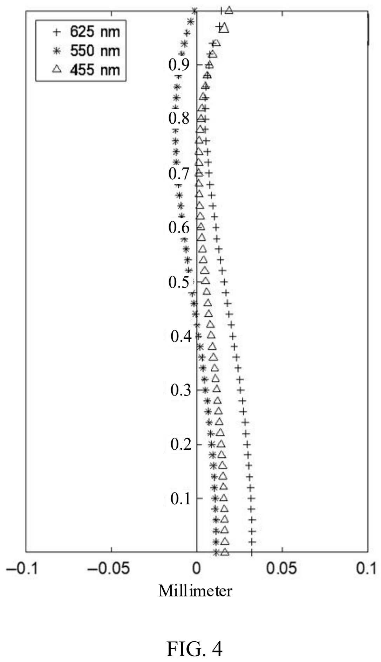

FIG. 4 is a spherical aberration and chromatic aberration diagram of the lens in FIG. 3. In FIG. 4, a vertical coordinate represents a normalized pupil coordinate, and a horizontal coordinate represents an aberration in an axial direction, in millimeters. In FIG. 4, three curves respectively correspond to curves of axial aberrations of light with a wavelength of 625 nm, light with a wavelength of 550 nm, and light with a wavelength of 455 nm after the light passes through the lens 100 in this embodiment. It can be learned from FIG. 4 that, in this embodiment, the axial aberrations are controlled to be within a very narrow range, to achieve better correction.

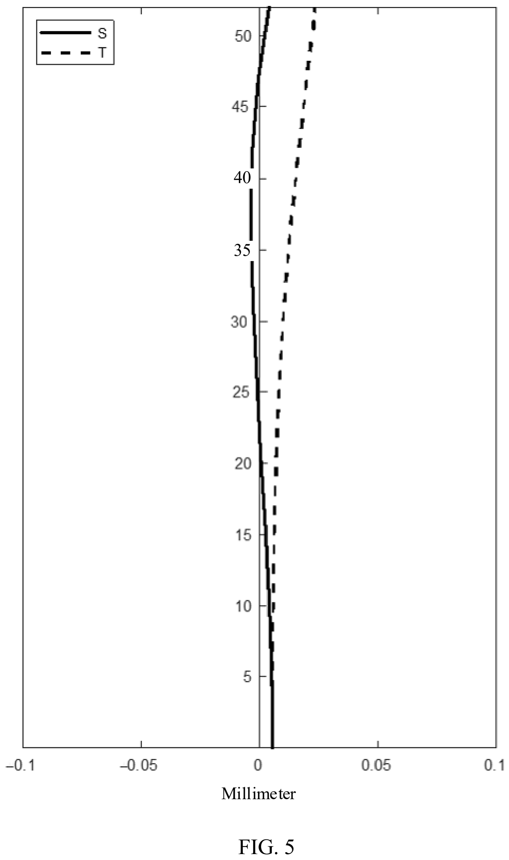

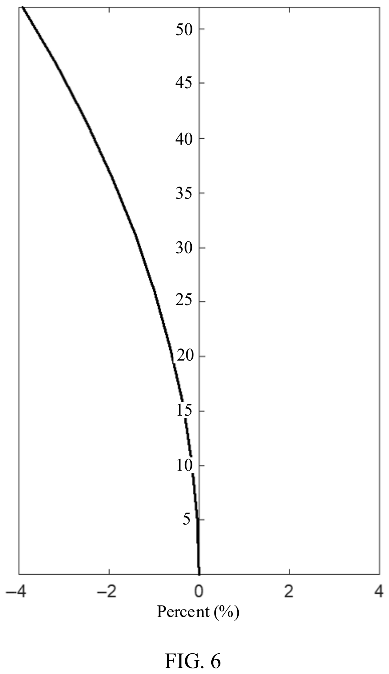

FIG. 5 is an astigmatic field curvature diagram of the lens in FIG. 3. FIG. 6 is a distortion diagram of the lens in FIG. 3. In FIG. 5, S represents a field curvature value of light with a wavelength of 550 nm on a meridian image plane, and T represents a field curvature value of light with a wavelength of 550 nm on a sagittal image plane. In FIG. 6, a solid line represents a distortion value of light with a center wavelength of 550 nm that passes through the lens 100 in this embodiment. With reference to FIG. 5 and FIG. 6, it can be learned that the lens 100 provided in this embodiment controls the field curvature and distortion to be within corresponding ranges, which can meet a use requirement.

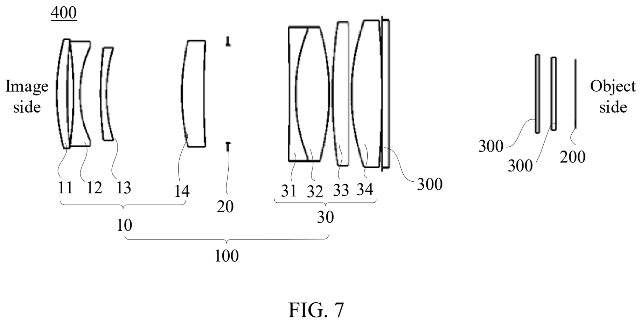

FIG. 7 is a diagram of a structure of a second projection apparatus according to Embodiment 2 of this application.

With reference to FIG. 7, it can be learned that the projection apparatus 400 provided in Embodiment 2 may include a modulation unit 200, cover glass 300, and the lens 100. The lens 100 includes a first lens group 10, an aperture stop 20, and a second lens group 30 that are arranged from an image side to an object side. In a direction from the image side to the object side, the second lens group 30 is disposed between the aperture stop 20 and the modulation unit 200, and the cover glass 300 is disposed between the modulation unit 200 and the lens 100. There are three pieces of cover glass 300, and the three pieces of cover glass 300 are spaced apart in a direction from the object side to the image side.

With reference to FIG. 7, it can be learned that the first lens group 10 may include a first lens element 11, a second lens element 12, a third lens element 13, and a fourth lens element 14 that are sequentially arranged from the image side to the object side. The first lens element 11 is closest to the image side, and the fourth lens element 14 is closest to the aperture stop 20. The first lens element 11 has a positive focal power, and a focal length f1 of the first lens element 11 is 60.01. The second lens element 12 has a negative focal power, and a focal length f2 of the second lens element 12 is -17.61. The third lens element 13 has a negative focal power, and a focal length f3 of the third lens element 13 is -50.70. The fourth lens element 14 has a positive focal power, and a focal length f4 of the fourth lens element 14 is 42.26.

With reference to FIG. 7, it can be learned that the second lens group 30 may include a fifth lens element 31, a sixth lens element 32, a seventh lens element 33, and an eighth lens element 34 that are sequentially arranged from the image side to the object side. The fifth lens element 31 is closest to the aperture stop 20, the fifth lens element 31 and the sixth lens element 32 form a glued lens, and the eighth lens element 34 is closest to the modulation unit 200. The fifth lens element 31 has a negative focal power, the sixth lens element 32 has a positive focal power, and the glued lens formed by the fifth lens element 31 and the sixth lens element 32 has a negative focal power. A focal length f56 of the glued lens is -2729.326. The seventh lens element 33 has a positive focal power, and a focal length f7 of the seventh lens element 33 is 80.60. The eighth lens element 34 has a positive focal power, and a focal length f8 of the eighth lens element 34 is 37.05.

A lens element closest to the image side in the lens 100 is the first lens element 11, and a curvature radius of an image-side surface of the first lens element 11 is 28.01 mm, which is greater than 26 mm and less than 70 mm, and meets a requirement. A ratio R1/EFL of the curvature radius R1 of the image-side surface of the first lens element 11 to a focal length EFL of the lens 100, is 2.0122, which is greater than 2 and less than 5, and meets a requirement. A focal length EFL 1 of the first lens group 10 is -57.386 mm, which is greater than -58 mm and less than -40 mm, and meets a requirement.

A lens element closest to the object side in the lens 100 is the eighth lens element 34, and a curvature radius of an object-side surface of the eighth lens element 34 is -115.75 mm, which is greater than -140 mm and less than -50 mm, and meets a requirement. A ratio R2/EFL of the curvature radius R2 of the object-side surface of the eighth lens element 34 to the focal length EFL of the lens 100, is -8.32, which is greater than -10 and less than -3, and meets a requirement. A focal length EFL 2 of the second lens group 30 is 24.323 mm, which is greater than 19 mm and less than 25 mm, and meets a requirement.

In the direction from the image side to the object side, a distance between the modulation unit 200 and the object-side surface of the eighth lens element 34 is 30.83 mm. That is, a back focal length BFL of the lens 100 is 30.83 mm, which is greater than 28 mm and less than 33 mm, and meets a requirement.

The focal length EFL of the lens 100 is 13.91 mm, which is greater than 13.5 mm and less than 14.5 mm, which meets a requirement.

**Table 3 lists optical parameters of each optical element in the second projection apparatus 400 provided in Embodiment 2 of this application.**

| Surface number | Surface profile | R (mm) | TH (mm) | Nd | Vd |
|---|---|---|---|---|---|
| OBJ | Spherical | Infinity | 140.323 | | |
| S1 | Spherical | 28.006 | 1.627 | 1.835 | 42.73 |
| S2 | Spherical | 61.440 | 1.032 | | |
| S3 | Spherical | -46.378 | 1.000 | 1.6 | 60.6 |
| S4 | Spherical | 13.955 | 3.312 | | |
| S5 | Spherical | 48.454 | 0.950 | 1.67 | 48.4 |
| S6 | Spherical | 19.807 | 12.000 | | |
| S7 | Spherical | 27.651 | 3.539 | 1.85 | 23.8 |
| S8 | Spherical | 111.218 | 3.817 | | |
| S9 | Spherical | Infinity | 9.825 | | |
| S10 | Spherical | -290.423 | 1.000 | 2 | 25.5 |
| S11 | Spherical | 22.311 | 5.348 | 1.59 | 68.34 |
| S12 | Spherical | -29.466 | 0.498 | | |
| S13 | Spherical | 57.108 | 2.544 | 1.7 | 56.18 |
| S14 | Spherical | -4307.605 | 0.529 | | |
| S15 | Spherical | 27.360 | 4.850 | 1.6 | 65.5 |
| S16 | Spherical | -115.750 | 0.020 | | |
| S17 | Spherical | Infinity | 0.000 | | |
| S18 | Spherical | Infinity | 1.100 | 1.5 | 63.4 |
| S19 | Spherical | Infinity | 23.400 | | |
| S20 | Spherical | Infinity | 0.550 | 1.5 | 63.4 |
| S21 | | Infinity | 2.000 | | |
| S22 | | Infinity | 0.700 | 1.52 | 62 |
| S23 | | Infinity | 3.059 | 1.835 | 42.73 |
| ImgH | | Infinity | 0.000 | | |

S1 represents the image-side surface of the first lens element 11; S2 represents an object-side surface of the first lens element 11; S3 represents an image-side surface of the second lens element 12; S4 represents an object-side surface of the second lens element 12; S5 represents an image-side surface of the third lens element 13; S6 represents an object-side surface of the third lens element 13; S7 represents an image-side surface of the fourth lens element 14; S8 represents an object-side surface of the fourth lens element 14; S9 represents the aperture stop 20; S10 represents an image-side surface of the fifth lens element 31; S11 represents a surface on which the fifth lens element 31 and the sixth lens element 32 are glued; S12 represents an object-side surface of the sixth lens element 32; S13 represents an image-side surface of the seventh lens element 33; S14 represents an object-side surface of the seventh lens element 33; S15 represents the image-side surface of the eighth lens element 34; S16 represents an object-side surface of the eighth lens element 34; S17 represents an image-side surface of a first piece of cover glass 300 close to the lens 100; S18 represents an object-side surface of the first piece of cover glass 300 close to the lens 100; S19 represents an image-side surface of a second piece of cover glass 300 close to the lens 100; S20 represents an object-side surface of the second piece of cover glass 300 close to the lens 100; S21 represents an image-side surface of a third piece of cover glass 300 close to the lens 100; S22 represents an object-side surface of the third piece of cover glass 300 close to the lens 100; S23 represents the modulation unit 200; OBJ represents a projection surface (object surface); and ImgH represents an imaging plane.

R represents a curvature radius of an optical element (for example, a lens element or the cover glass 300) at a corresponding position on an optical axis; TH represents a surface thickness of the optical element in a direction of the optical axis; Nd represents a refractive index of each optical element irradiated by a d line; and Vd represents an Abbe number of an optical element.

**Table 4 lists optical parameters of the lens 100 in FIG. 7.**

| | | | |
|---|---|---|---|
| f1 (mm) | 60.010 | R1/EFL | 2.0122 |
| f2 (mm) | -17.614 | R2/EFL | -8.32 |
| f3 (mm) | -50.703 | EFL 1 | -57.386 |
| f4 (mm) | 42.259 | EFL 2 | 24.323 |
| f56 (mm) | -2729.326 | EFL (mm) | 13.91 |
| f7 (mm) | 80.598 | Fno | 1.9 |
| f8 (mm) | 37.052 | BFL (mm) | 30.83 |

EFL represents the focal length of the lens 100; EFL 1 represents the focal length of the first lens group 10; EFL 2 represents the focal length of the second lens group 30; Fno represents an aperture stop of the lens 100; BFL represents the back focal length of the lens 100; R1 represents the curvature radius of the image-side surface of the lens element closest to the image side in the lens 100; R2 represents the curvature radius of the object-side surface of the lens element closest to the object side in the lens 100; f1 represents the focal length of the first lens element 11; f2 represents the focal length of the second lens element 12; f3 represents the focal length of the third lens element 13; f4 represents the focal length of the fourth lens element 14; f56 represents the focal length of the glued lens formed by the fifth lens element 31 and the sixth lens element 3; f7 represents the focal length of the seventh lens element 33; and f8 represents the focal length of the eighth lens element 34.

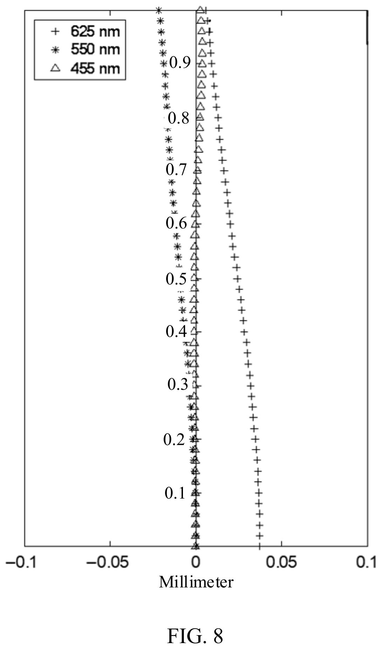

FIG. 8 is a spherical aberration and chromatic aberration diagram of the lens in FIG. 7. In FIG. 8, a vertical coordinate represents a normalized pupil coordinate, and a horizontal coordinate represents an aberration in an axial direction, in millimeters. In FIG. 8, three curves respectively correspond to curves of axial aberrations of light with a wavelength of 625 nm, light with a wavelength of 550 nm, and light with a wavelength of 455 nm after the light passes through the lens 100 in this embodiment. It can be learned from FIG. 8 that, in this embodiment, the axial aberrations are controlled to be within a very narrow range, to achieve better correction.

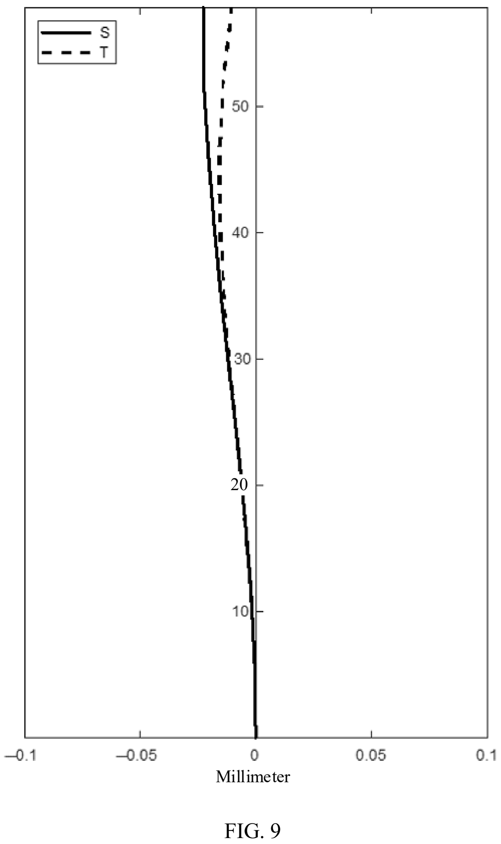

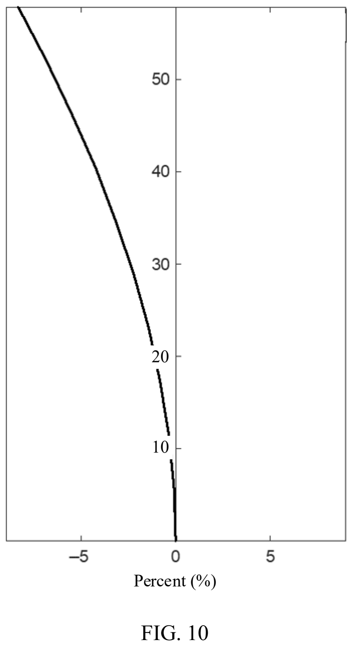

FIG. 9 is an astigmatic field curvature diagram of the lens in FIG. 7. FIG. 10 is a distortion diagram of the lens in FIG. 7. In FIG. 9, S represents a field curvature value of light with a wavelength of 550 nm on a meridian image plane, and T represents a field curvature value of light with a wavelength of 550 nm on a sagittal image plane. In FIG. 10, a solid line represents a distortion value of light with a center wavelength of 550 nm that passes through the lens 100 in this embodiment. With reference to FIG. 9 and FIG. 10, it can be learned that the lens 100 provided in this embodiment controls the field curvature and distortion to be within corresponding ranges, which can meet a use requirement.

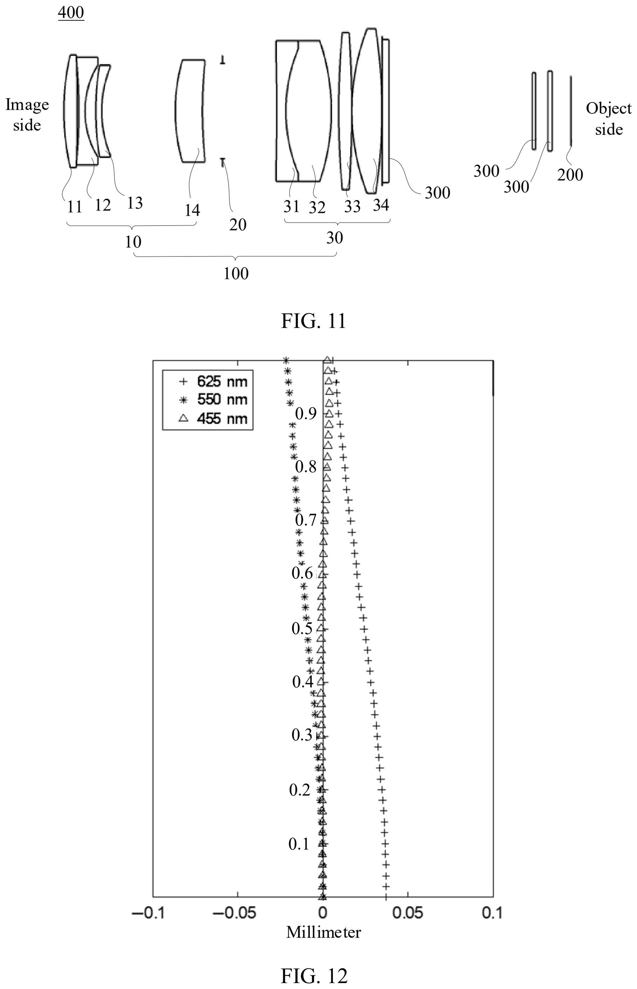

FIG. 11 is a diagram of a structure of a third projection apparatus according to Embodiment 3 of this application.

With reference to FIG. 11, it can be learned that the projection apparatus 400 provided in Embodiment 3 may include a modulation unit 200, cover glass 300, and the lens 100. The lens 100 includes a first lens group 10, an aperture stop 20, and a second lens group 30 that are arranged from an image side to an object side. In a direction from the image side to the object side, the second lens group 30 is disposed between the aperture stop 20 and the modulation unit 200, and the cover glass 300 is disposed between the modulation unit 200 and the lens 100. There are three pieces of cover glass 300, and the three pieces of cover glass 300 are spaced apart in a direction from the object side to the image side.

With reference to FIG. 11, it can be learned that the first lens group 10 may include a first lens element 11, a second lens element 12, a third lens element 13, and a fourth lens element 14 that are sequentially arranged from the image side to the object side. The first lens element 11 is closest to the image side, and the fourth lens element 14 is closest to the aperture stop 20. The first lens element 11 has a positive focal power, and a focal length f1 of the first lens element 11 is 33.76. The second lens element 12 has a negative focal power, and a focal length f2 of the second lens element 12 is -16.56. The third lens element 13 has a negative focal power, and a focal length f3 of the third lens element 13 is -39.08. The fourth lens element 14 has a positive focal power, and a focal length f4 of the fourth lens element 14 is 43.78.

With reference to FIG. 11, it can be learned that the second lens group 30 may include a fifth lens element 31, a sixth lens element 32, a seventh lens element 33, and an eighth lens element 34 that are sequentially arranged from the image side to the object side. The fifth lens element 31 is closest to the aperture stop 20, the fifth lens element 31 and the sixth lens element 32 form a glued lens, and the eighth lens element 34 is closest to the modulation unit 200. The fifth lens element 31 has a negative focal power, the sixth lens element 32 has a positive focal power, and the glued lens formed by the fifth lens element 31 and the sixth lens element 32 has a positive focal power. A focal length f56 of the glued lens is 3992.74. The seventh lens element 33 has a positive focal power, and a focal length f7 of the seventh lens element 33 is 91.10. The eighth lens element 34 has a positive focal power, and a focal length f8 of the eighth lens element 34 is 35.08.

A lens element closest to the image side in the lens 100 is the first lens element 11, and a curvature radius of an image-side surface of the first lens element 11 is 32.35 mm, which is greater than 26 mm and less than 70 mm, and meets a requirement. A ratio R1/EFL of the curvature radius R1 of the image-side surface of the first lens element 11 to a focal length EFL of the lens 100, is 2.267, which is greater than 2 and less than 5, and meets a requirement. A focal length EFL 1 of the first lens group 10 is -55.992 mm, which is greater than -58 mm and less than -40 mm, and meets a requirement.

A lens element closest to the object side in the lens 100 is the eighth lens element 34, and a curvature radius of an object-side surface of the eighth lens element 34 is -70.02 mm, which is greater than -140 mm and less than -50 mm, and meets a requirement. A ratio R2/EFL of the curvature radius R2 of the object-side surface of the eighth lens element 34 to the focal length EFL of the lens 100, is -4.908, which is greater than -10 and less than -3, and meets a requirement. A focal length EFL 2 of the second lens group 30 is 22.981 mm, which is greater than 19 mm and less than 25 mm, and meets a requirement.

In the direction from the image side to the object side, a distance between the modulation unit 200 and the object-side surface of the eighth lens element 34 is 30.83 mm. That is, a back focal length BFL of the lens 100 is 30.83 mm, which is greater than 28 mm and less than 33 mm, and meets a requirement.

The focal length EFL of the lens 100 is 14.266 mm, which is greater than 13.5 mm and less than 14.5 mm, which meets a requirement.

**Table 5 lists optical parameters of each optical element in the third projection apparatus 400 provided in Embodiment 3 of this application.**

| Surface number | Surface profile | R (mm) | TH (mm) | Nd | Vd |
|---|---|---|---|---|---|
| OBJ | Spherical | Infinity | 140.323 | | |
| S1 | Spherical | 32.345 | 2.171 | 1.835 | 42.73 |
| S2 | Spherical | -220.700 | 0.271 | | |
| S3 | Spherical | -76.336 | 1.000 | 1.6 | 60.6 |
| S4 | Spherical | 11.597 | 1.765 | | |
| S5 | Spherical | 36.427 | 0.966 | 1.67 | 48.4 |
| S6 | Spherical | 15.067 | 12.000 | | |
| S7 | Spherical | 24.002 | 4.434 | 1.85 | 23.8 |
| S8 | Spherical | 61.312 | 3.282 | | |
| S9 | Spherical | Infinity | 8.819 | | |
| S10 | Spherical | -288.117 | 1.496 | 2 | 25.5 |
| S11 | Spherical | 20.966 | 7.425 | 1.59 | 68.34 |
| S12 | Spherical | -28.040 | 1.189 | | |
| S13 | Spherical | 110.913 | 2.135 | 1.7 | 56.18 |
| S14 | Spherical | -148.572 | 0.020 | | |
| S15 | Spherical | 29.649 | 4.897 | 1.6 | 65.5 |
| S16 | Spherical | -70.025 | 0.020 | | |
| S17 | Spherical | Infinity | 0.000 | | |
| S18 | Spherical | Infinity | 1.100 | 1.5 | 63.4 |
| S19 | Spherical | Infinity | 23.400 | | |
| S20 | Spherical | Infinity | 0.550 | 1.5 | 63.4 |
| S21 | Spherical | Infinity | 2.000 | | |
| S22 | Spherical | Infinity | 0.700 | 1.52 | 62 |
| S23 | Spherical | Infinity | 3.059 | | |
| ImgH | Spherical | Infinity | 0.000 | | |

S1 represents the image-side surface of the first lens element 11; S2 represents an object-side surface of the first lens element 11; S3 represents an image-side surface of the second lens element 12; S4 represents an object-side surface of the second lens element 12; S5 represents an image-side surface of the third lens element 13; S6 represents an object-side surface of the third lens element 13; S7 represents an image-side surface of the fourth lens element 14; S8 represents an object-side surface of the fourth lens element 14; S9 represents the aperture stop 20; S10 represents an image-side surface of the fifth lens element 31; S11 represents a surface on which the fifth lens element 31 and the sixth lens element 32 are glued; S12 represents an object-side surface of the sixth lens element 32; S13 represents an image-side surface of the seventh lens element 33; S14 represents an object-side surface of the seventh lens element 33; S15 represents the image-side surface of the eighth lens element 34; S16 represents an object-side surface of the eighth lens element 34; S17 represents an image-side surface of a first piece of cover glass 300 close to the lens 100; S18 represents an object-side surface of the first piece of cover glass 300 close to the lens 100; S19 represents an image-side surface of a second piece of cover glass 300 close to the lens 100; S20 represents an object-side surface of the second piece of cover glass 300 close to the lens 100; S21 represents an image-side surface of a third piece of cover glass 300 close to the lens 100; S22 represents an object-side surface of the third piece of cover glass 300 close to the lens 100; S23 represents the modulation unit 200; OBJ represents a projection surface (object surface); and ImgH represents an imaging plane.

R represents a curvature radius of an optical element (for example, a lens element or the cover glass 300) at a corresponding position on an optical axis; TH represents a surface thickness of the optical element in a direction of the optical axis; Nd represents a refractive index of each optical element irradiated by a d line; and Vd represents an Abbe number of an optical element.

**Table 6 lists optical parameters of the lens 100 in FIG. 11.**

| | | | |
|---|---|---|---|
| f1 (mm) | 33.758 | R1/EFL | 2.267 |
| f2 (mm) | -16.563 | R2/EFL | -4.908 |
| f3 (mm) | -39.081 | EFL 1 | -55.992 |
| f4 (mm) | 43.780 | EFL 2 | 22.981 |
| f56 (mm) | 3992.139 | EFL (mm) | 14.266 |
| f7 (mm) | 91.101 | Fno | 1.898 |
| f8 (mm) | 35.081 | BFL (mm) | 30.829 |

EFL represents the focal length of the lens 100; EFL 1 represents the focal length of the first lens group 10; EFL 2 represents the focal length of the second lens group 30; Fno represents an aperture stop of the lens 100; BFL represents the back focal length of the lens 100; R1 represents the curvature radius of the image-side surface of the lens element closest to the image side in the lens 100; R2 represents the curvature radius of the object-side surface of the lens element closest to the object side in the lens 100; f1 represents the focal length of the first lens element 11; f2 represents the focal length of the second lens element 12; f3 represents the focal length of the third lens element 13; f4 represents the focal length of the fourth lens element 14; f56 represents the focal length of the glued lens formed by the fifth lens element 31 and the sixth lens element 3; f7 represents the focal length of the seventh lens element 33; and f8 represents the focal length of the eighth lens element 34.

FIG. 12 is a spherical aberration and chromatic aberration diagram of the lens in FIG. 11. In FIG. 12, a vertical coordinate represents a normalized pupil coordinate, and a horizontal coordinate represents an aberration in an axial direction, in millimeters. In FIG. 12, three curves respectively correspond to curves of axial aberrations of light with a wavelength of 625 nm, light with a wavelength of 550 nm, and light with a wavelength of 455 nm after the light passes through the lens 100 in this embodiment. It can be learned from FIG. 12 that, in this embodiment, the axial aberrations are to be controlled within a very narrow range, to achieve better correction.

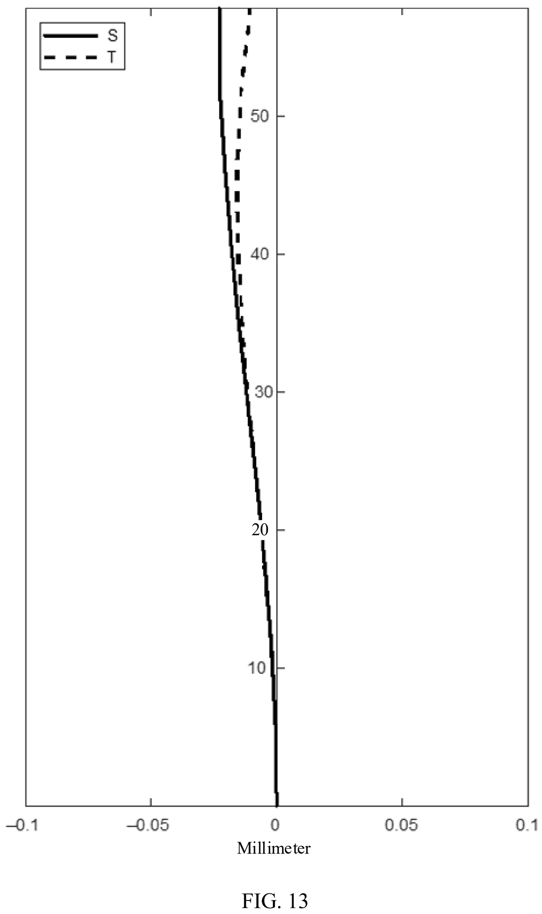

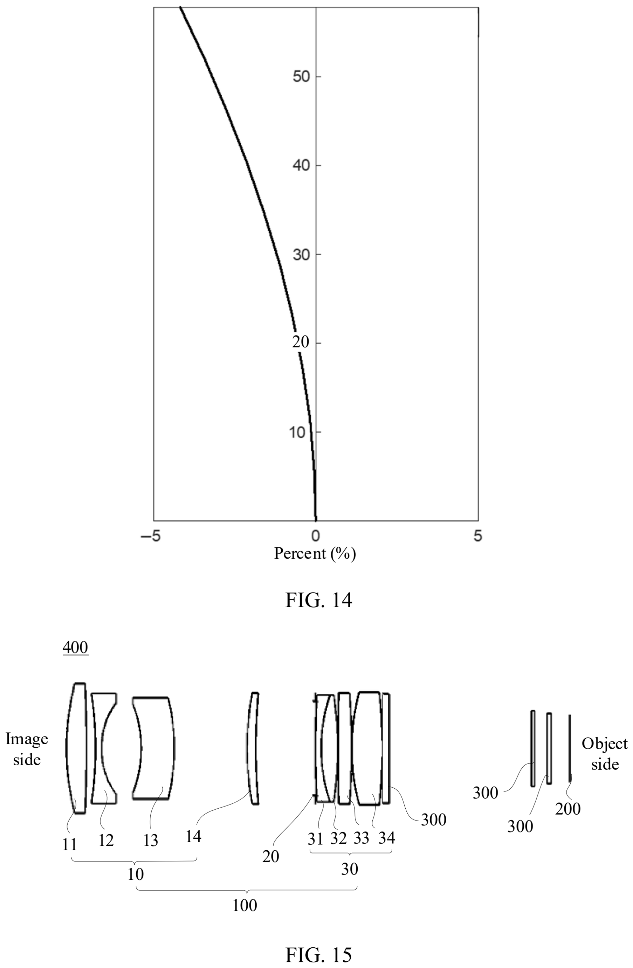

FIG. 13 is an astigmatic field curvature diagram of the lens in FIG. 11. FIG. 14 is a distortion diagram of the lens in FIG. 11. In FIG. 13, S represents a field curvature value of light with a wavelength of 550 nm on a meridian image plane, and T represents a field curvature value of light with a wavelength of 550 nm on a sagittal image plane. In FIG. 14, a solid line represents a distortion value of light with a center wavelength of 550 nm that passes through the lens 100 in this embodiment. With reference to FIG. 13 and FIG. 14, it can be learned that the lens 100 provided in this embodiment controls the field curvature and distortion to be within corresponding ranges, which can meet a use requirement.

FIG. 15 is a diagram of a structure of a fourth projection apparatus according to Embodiment 4 of this application.

With reference to FIG. 15, it can be learned that the projection apparatus 400 provided in Embodiment 4 may include a modulation unit 200, cover glass 300, and the lens 100. The lens 100 includes a first lens group 10, an aperture stop 20, and a second lens group 30 that are arranged from an image side to an object side. In a direction from the image side to the object side, the second lens group 30 is disposed between the aperture stop 20 and the modulation unit 200, and the cover glass 300 is disposed between the modulation unit 200 and the lens 100. There are three pieces of cover glass 300, and the three pieces of cover glass 300 are spaced apart in a direction from the object side to the image side.

With reference to FIG. 15, it can be learned that the first lens group 10 may include a first lens element 11, a second lens element 12, a third lens element 13, and a fourth lens element 14 that are sequentially arranged from the image side to the object side. The first lens element 11 is closest to the image side, and the fourth lens element 14 is closest to the aperture stop 20. The first lens element 11 has a positive focal power, and a focal length f1 of the first lens element 11 is 33.05. The second lens element 12 has a negative focal power, and a focal length f2 of the second lens element 12 is -14.19. The third lens element 13 has a negative focal power, and a focal length f3 of the third lens element 13 is -73.9. The fourth lens element 14 has a positive focal power, and a focal length f4 of the fourth lens element 14 is 80.54.

With reference to FIG. 15, it can be learned that the second lens group 30 may include a fifth lens element 31, a sixth lens element 32, a seventh lens element 33, and an eighth lens element 34 that are sequentially arranged from the image side to the object side. The fifth lens element 31 is closest to the aperture stop 20, the fifth lens element 31 and the sixth lens element 32 form a glued lens, and the eighth lens element 34 is closest to the modulation unit 200. The fifth lens element 31 has a negative focal power, the sixth lens element 32 has a positive focal power, and the glued lens formed by the fifth lens element 31 and the sixth lens element 32 has a positive focal power. A focal length f56 of the glued lens is 263.74. The seventh lens element 33 has a positive focal power, and a focal length f7 of the seventh lens element 33 is 101.32. The eighth lens element 34 has a positive focal power, and a focal length f8 of the eighth lens element 34 is 35.18.

A lens element closest to the image side in the lens 100 is the first lens element 11, and a curvature radius of an image-side surface of the first lens element 11 is 32.67 mm, which is greater than 26 mm and less than 70 mm, and meets a requirement. A ratio R1/EFL of the curvature radius R1 of the image-side surface of the first lens element 11 to a focal length EFL of the lens 100, is 2.317, which is greater than 2 and less than 5, and meets a requirement. A focal length EFL 1 of the first lens group 10 is -45.742 mm, which is greater than -58 mm and less than -40 mm, and meets a requirement.

A lens element closest to the object side in the lens 100 is the eighth lens element 34, and a curvature radius of an object-side surface of the eighth lens element 34 is -70.84 mm, which is greater than -140 mm and less than -50 mm, and meets a requirement. A ratio R2/EFL of the curvature radius R2 of the object-side surface of the eighth lens element 34 to the focal length EFL of the lens 100, is -5.023, which is greater than -10 and less than -3, and meets a requirement. A focal length EFL 2 of the second lens group 30 is 23.880 mm, which is greater than 19 mm and less than 25 mm, and meets a requirement.

In the direction from the image side to the object side, a distance between the modulation unit 200 and the object-side surface of the eighth lens element 34 is 30.81 mm. That is, a back focal length BFL of the lens 100 is 30.81 mm, which is greater than 28 mm and less than 33 mm, and meets a requirement.

The focal length EFL of the lens 100 is 14.102 mm, which is greater than 13.5 mm and less than 14.5 mm, which meets a requirement.

**Table 7 lists optical parameters of each optical element in the fourth projection apparatus 400 provided in Embodiment 4 of this application.**

| Surface number | Surface profile | R (mm) | TH (mm) | Nd | Vd |
|---|---|---|---|---|---|
| OBJ | Spherical | Infinity | 140.323 | | |
| S1 | Spherical | 32.345 | 2.171 | 1.835 | 42.73 |
| S2 | Spherical | -220.700 | 0.271 | | |
| S3 | Spherical | -76.336 | 1.000 | 1.6 | 60.6 |
| S4 | Spherical | 11.597 | 1.765 | | |
| S5 | Spherical | 36.427 | 0.966 | 1.67 | 48.4 |
| S6 | Spherical | 15.067 | 12.000 | | |
| S7 | Spherical | 24.002 | 4.434 | 1.85 | 23.8 |
| S8 | Spherical | 61.312 | 3.282 | | |
| S9 | Spherical | Infinity | 8.819 | | |
| S10 | Spherical | -288.117 | 1.496 | 2 | 25.5 |
| S11 | Spherical | 20.966 | 7.425 | 1.59 | 68.34 |
| S12 | Spherical | -28.040 | 1.189 | | |
| S13 | Spherical | 110.913 | 2.135 | 1.7 | 56.18 |
| S14 | Spherical | -148.572 | 0.020 | | |
| S15 | Spherical | 29.649 | 4.897 | 1.6 | 65.5 |
| S16 | Spherical | -70.025 | 0.020 | | |
| S17 | Spherical | Infinity | 0.000 | | |
| S18 | Spherical | Infinity | 1.100 | 1.5 | 63.4 |
| S19 | Spherical | Infinity | 23.400 | | |
| S20 | Spherical | Infinity | 0.550 | 1.5 | 63.4 |
| S21 | Spherical | Infinity | 2.000 | | |
| S22 | Spherical | Infinity | 0.700 | 1.52 | 62 |
| S23 | Spherical | Infinity | 3.059 | | |
| ImgH | Spherical | Infinity | 0.000 | | |

S1 represents the image-side surface of the first lens element 11; S2 represents an object-side surface of the first lens element 11; S3 represents an image-side surface of the second lens element 12; S4 represents an object-side surface of the second lens element 12; S5 represents an image-side surface of the third lens element 13; S6 represents an object-side surface of the third lens element 13; S7 represents an image-side surface of the fourth lens element 14; S8 represents an object-side surface of the fourth lens element 14; S9 represents the aperture stop 20; S10 represents an image-side surface of the fifth lens element 31; S11 represents a surface on which the fifth lens element 31 and the sixth lens element 32 are glued; S12 represents an object-side surface of the sixth lens element 32; S13 represents an image-side surface of the seventh lens element 33; S14 represents an object-side surface of the seventh lens element 33; S15 represents the image-side surface of the eighth lens element 34; S16 represents an object-side surface of the eighth lens element 34; S17 represents an image-side surface of a first piece of cover glass 300 close to the lens 100; S18 represents an object-side surface of the first piece of cover glass 300 close to the lens 100; S19 represents an image-side surface of a second piece of cover glass 300 close to the lens 100; S20 represents an object-side surface of the second piece of cover glass 300 close to the lens 100; S21 represents an image-side surface of a third piece of cover glass 300 close to the lens 100; S22 represents an object-side surface of the third piece of cover glass 300 close to the lens 100; S23 represents the modulation unit 200; OBJ represents a projection surface (object surface); and ImgH represents an imaging plane.

R represents a curvature radius of an optical element (for example, a lens element or the cover glass 300) at a corresponding position on an optical axis; TH represents a surface thickness of the optical element in a direction of the optical axis; Nd represents a refractive index of each optical element irradiated by a d line; and Vd represents an Abbe number of an optical element.

**Table 8 lists optical parameters of the lens 100 in FIG. 15.**

| | | | |
|---|---|---|---|
| f1 (mm) | 33.049 | R1/EFL | 2.317 |
| f2 (mm) | -14.191 | R2/EFL | -5.023 |
| f3 (mm) | -73.900 | EFL 1 | -45.742 |
| f4 (mm) | 80.545 | EFL 2 | 23.880 |
| f56 (mm) | 263.742 | EFL (mm) | 14.102 |
| f7 (mm) | 101.322 | Fno | 2.01 |
| f8 (mm) | 35.176 | BFL (mm) | 30.809 |

EFL represents the focal length of the lens 100; EFL 1 represents the focal length of the first lens group 10; EFL 2 represents the focal length of the second lens group 30; Fno represents an aperture stop of the lens 100; BFL represents the back focal length of the lens 100; R1 represents the curvature radius of the image-side surface of the lens element closest to the image side in the lens 100; R2 represents the curvature radius of the object-side surface of the lens element closest to the object side in the lens 100; f1 represents the focal length of the first lens element 11; f2 represents the focal length of the second lens element 12; f3 represents the focal length of the third lens element 13; f4 represents the focal length of the fourth lens element 14; f56 represents the focal length of the glued lens formed by the fifth lens element 31 and the sixth lens element 3; f7 represents the focal length of the seventh lens element 33; and f8 represents the focal length of the eighth lens element 34.

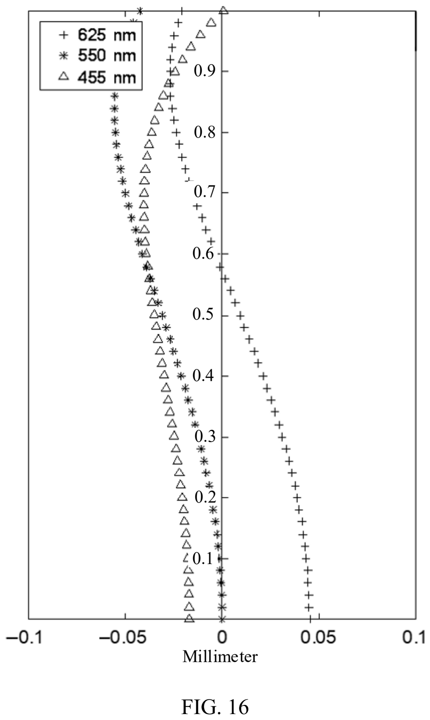

FIG. 16 is a spherical aberration and chromatic aberration diagram of the lens in FIG. 15. In FIG. 16, a vertical coordinate represents a normalized pupil coordinate, and a horizontal coordinate represents an aberration in an axial direction, in millimeters. In FIG. 16, three curves respectively correspond to curves of axial aberrations of light with a wavelength of 625 nm, light with a wavelength of 550 nm, and light with a wavelength of 455 nm after the light passes through the lens 100 in this embodiment. It can be learned from FIG. 16 that, in this embodiment, the axial aberrations are to be controlled within a very narrow range, to achieve better correction.

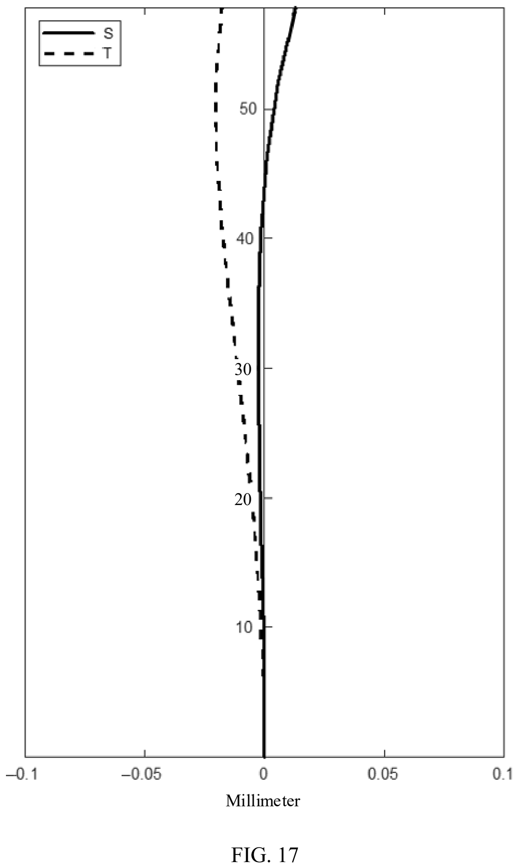

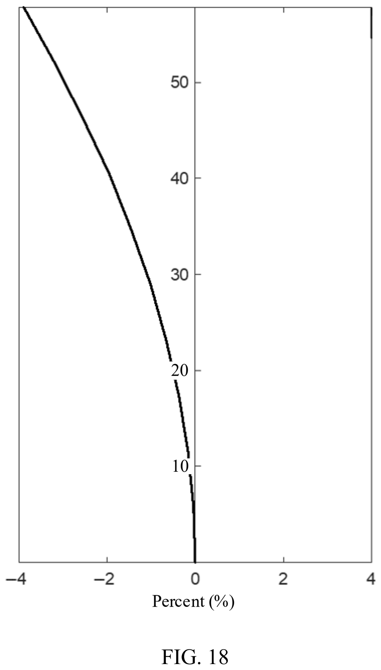

FIG. 17 is an astigmatic field curvature diagram of the lens in FIG. 15. FIG. 18 is a distortion diagram of the lens in FIG. 15. In FIG. 17, S represents a field curvature value of light with a wavelength of 550 nm on a meridian image plane, and T represents a field curvature value of light with a wavelength of 550 nm on a sagittal image plane. In FIG. 18, a solid line represents a distortion value of light with a center wavelength of 550 nm that passes through the lens 100 in this embodiment. With reference to FIG. 17 and FIG. 18, it can be learned that the lens 100 provided in this embodiment controls the field curvature and distortion to be within corresponding ranges, which can meet a use requirement.

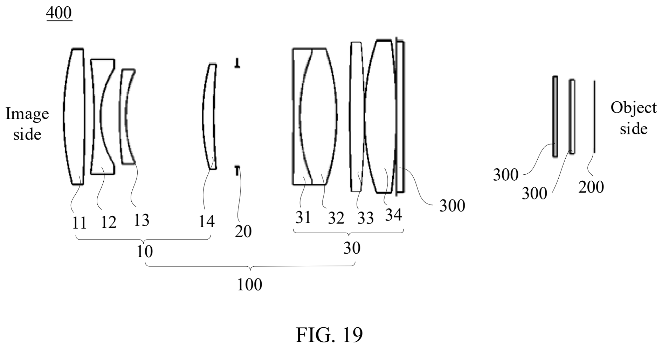

FIG. 19 is a diagram of a structure of a fifth projection apparatus according to Embodiment 5 of this application.

With reference to FIG. 19, it can be learned that the projection apparatus 400 provided in Embodiment 5 may include a modulation unit 200, cover glass 300, and the lens 100. The lens 100 includes a first lens group 10, an aperture stop 20, and a second lens group 30 that are arranged from an image side to an object side. In a direction from the image side to the object side, the second lens group 30 is disposed between the aperture stop 20 and the modulation unit 200, and the cover glass 300 is disposed between the modulation unit 200 and the lens 100. There are three pieces of cover glass 300.

With reference to FIG. 19, it can be learned that the first lens group 10 may include a first lens element 11, a second lens element 12, a third lens element 13, and a fourth lens element 14 that are sequentially arranged from the image side to the object side. The first lens element 11 is closest to the image side, and the fourth lens element 14 is closest to the aperture stop 20. The first lens element 11 has a positive focal power, and a focal length f1 of the first lens element 11 is 33.05. The second lens element 12 has a negative focal power, and a focal length f2 of the second lens element 12 is -15.41. The third lens element 13 has a negative focal power, and a focal length f3 of the third lens element 13 is -33.46. The fourth lens element 14 has a positive focal power, and a focal length f4 of the fourth lens element 14 is 44.42.

With reference to FIG. 19, it can be learned that the second lens group 30 may include a fifth lens element 31, a sixth lens element 32, a seventh lens element 33, and an eighth lens element 34 that are sequentially arranged from the image side to the object side. The fifth lens element 31 is closest to the aperture stop 20, the fifth lens element 31 and the sixth lens element 32 form a glued lens, and the eighth lens element 34 is closest to the modulation unit 200. The fifth lens element 31 has a negative focal power, the sixth lens element 32 has a positive focal power, and the glued lens formed by the fifth lens element 31 and the sixth lens element 32 has a positive focal power. A focal length f56 of the glued lens is 354.70. The seventh lens element 33 has a positive focal power, and a focal length f7 of the seventh lens element 33 is 101.32. The eighth lens element 34 has a positive focal power, and a focal length f8 of the eighth lens element 34 is 35.18.

A lens element closest to the image side in the lens 100 is the first lens element 11, and a curvature radius of an image-side surface of the first lens element 11 is 32.67 mm, which is greater than 26 mm and less than 70 mm, and meets a requirement. A ratio R1/EFL of the curvature radius R1 of the image-side surface of the first lens element 11 to a focal length EFL of the lens 100, is 2.317, which is greater than 2 and less than 5, and meets a requirement. A focal length EFL 1 of the first lens group 10 is -48.652 mm, which is greater than -58 mm and less than -40 mm, and meets a requirement.

A lens element closest to the object side in the lens 100 is the eighth lens element 34, and a curvature radius of an object-side surface of the eighth lens element 34 is -70.84 mm, which is greater than -140 mm and less than -50 mm, and meets a requirement. A ratio R2/EFL of the curvature radius R2 of the object-side surface of the eighth lens element 34 to the focal length EFL of the lens 100, is -5.023, which is greater than -10 and less than -3, and meets a requirement. A focal length EFL 2 of the second lens group 30 is 23.122 mm, which is greater than 19 mm and less than 25 mm, and meets a requirement.

In the direction from the image side to the object side, a distance between the modulation unit 200 and the object-side surface of the eighth lens element 34 is 30.81 mm. That is, a back focal length BFL of the lens 100 is 30.81 mm, which is greater than 28 mm and less than 33 mm, and meets a requirement.

The focal length EFL of the lens 100 is 14.103 mm, which is greater than 13.5 mm and less than 14.5 mm, which meets a requirement.

**Table 9 lists optical parameters of each optical element in the fifth projection apparatus 400 provided in Embodiment 5 of this application.**

| Surface number | Surface profile | R (mm) | TH (mm) | Nd | Vd |
|---|---|---|---|---|---|
| OBJ | Spherical | Infinity | 140.323 | | |
| S1 | Spherical | 32.670 | 3.280 | 1.835 | 42.73 |
| S2 | Spherical | -174.860 | 1.490 | | |
| S3 | Spherical | -55.900 | 1.000 | 1.6 | 60.6 |
| S4 | Spherical | 11.269 | 2.963 | | |
| S5 | Spherical | 45.241 | 0.950 | 1.67 | 48.4 |
| S6 | Spherical | 14.860 | 12.000 | | |
| S7 | Spherical | 24.823 | 1.713 | 1.85 | 23.8 |
| S8 | Spherical | 69.519 | 3.669 | | |
| S9 | Spherical | Infinity | 8.733 | | |
| S10 | Spherical | -518.284 | 1.000 | 2 | 25.5 |
| S11 | Spherical | 21.387 | 5.752 | 1.59 | 68.34 |
| S12 | Spherical | -26.535 | 2.060 | | |
| S13 | Spherical | 216.190 | 2.250 | 1.7 | 56.18 |
| S14 | Spherical | -104.980 | 0.040 | | |
| S15 | Spherical | 29.610 | 4.990 | 1.6 | 65.5 |
| S16 | Spherical | -70.840 | 0.000 | | |
| S17 | Spherical | Infinity | 0.000 | | |
| S18 | Spherical | Infinity | 1.100 | 1.5 | 63.4 |
| S19 | Spherical | Infinity | 23.400 | | |
| S20 | Spherical | Infinity | 0.550 | 1.5 | 63.4 |
| S21 | Spherical | Infinity | 2.000 | | |
| S22 | Spherical | Infinity | 0.700 | 1.52 | 62 |
| S23 | Spherical | Infinity | 3.059 | | |
| ImgH | Spherical | Infinity | 0.000 | | |

S1 represents the image-side surface of the first lens element 11; S2 represents an object-side surface of the first lens element 11; S3 represents an image-side surface of the second lens element 12; S4 represents an object-side surface of the second lens element 12; S5 represents an image-side surface of the third lens element 13; S6 represents an object-side surface of the third lens element 13; S7 represents an image-side surface of the fourth lens element 14; S8 represents an object-side surface of the fourth lens element 14; S9 represents the aperture stop 20; S10 represents an image-side surface of the fifth lens element 31; S11 represents a surface on which the fifth lens element 31 and the sixth lens element 32 are glued; S12 represents an object-side surface of the sixth lens element 32; S13 represents an image-side surface of the seventh lens element 33; S14 represents an object-side surface of the seventh lens element 33; S15 represents the image-side surface of the eighth lens element 34; S16 represents an object-side surface of the eighth lens element 34; S17 represents an image-side surface of a first piece of cover glass 300 close to the lens 100; S18 represents an object-side surface of the first piece of cover glass 300 close to the lens 100; S19 represents an image-side surface of a second piece of cover glass 300 close to the lens 100; S20 represents an object-side surface of the second piece of cover glass 300 close to the lens 100; S21 represents an image-side surface of a third piece of cover glass 300 close to the lens 100; S22 represents an object-side surface of the third piece of cover glass 300 close to the lens 100; S23 represents the modulation unit 200; OBJ represents a projection surface (object surface); and ImgH represents an imaging plane.

R represents a curvature radius of an optical element (for example, a lens element or the cover glass 300) at a corresponding position on an optical axis; TH represents a surface thickness of the optical element in a direction of the optical axis; Nd represents a refractive index of each optical element irradiated by a d line; and Vd represents an Abbe number of an optical element.

**Table 10 lists optical parameters of the lens 100 in FIG. 19.**

| | | | |
|---|---|---|---|
| f1 (mm) | 33.049 | R1/EFL | 2.317 |
| f2 (mm) | -15.409 | R2/EFL | -5.023 |
| f3 (mm) | -33.464 | EFL 1 | -48.652 |
| f4 (mm) | 44.419 | EFL 2 | 23.122 |
| f56 (mm) | 354.703 | EFL (mm) | 14.103 |
| f7 (mm) | 101.322 | Fno | 1.936 |
| f8 (mm) | 35.176 | BFL (mm) | 30.809 |

EFL represents the focal length of the lens 100; EFL 1 represents the focal length of the first lens group 10; EFL 2 represents the focal length of the second lens group 30; Fno represents an aperture stop of the lens 100; BFL represents the back focal length of the lens 100; R1 represents the curvature radius of the image-side surface of the lens element closest to the image side in the lens 100; R2 represents the curvature radius of the object-side surface of the lens element closest to the object side in the lens 100; f1 represents the focal length of the first lens element 11; f2 represents the focal length of the second lens element 12; f3 represents the focal length of the third lens element 13; f4 represents the focal length of the fourth lens element 14; f56 represents the focal length of the glued lens formed by the fifth lens element 31 and the sixth lens element 3; f7 represents the focal length of the seventh lens element 33; and f8 represents the focal length of the eighth lens element 34.

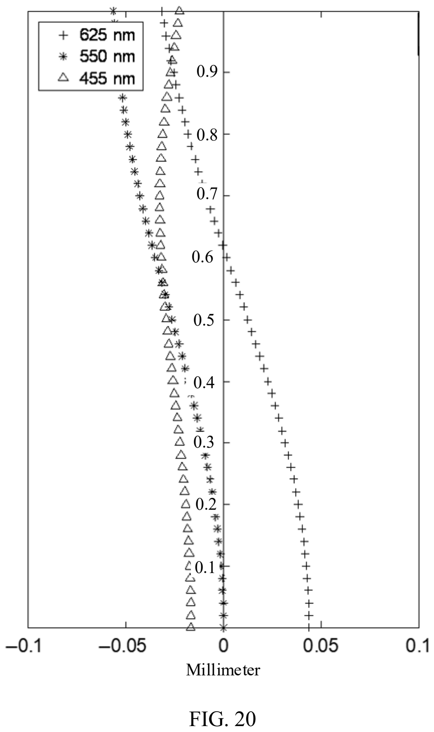

FIG. 20 is a spherical aberration and chromatic aberration diagram of the lens in FIG. 19. In FIG. 20, a vertical coordinate represents a normalized pupil coordinate, and a horizontal coordinate represents an aberration in an axial direction, in millimeters. In FIG. 20, three curves respectively correspond to curves of axial aberrations of light with a wavelength of 625 nm, light with a wavelength of 550 nm, and light with a wavelength of 455 nm after the light passes through the lens 100 in this embodiment. It can be learned from FIG. 20 that, in this embodiment, the axial aberrations are to be controlled within a very narrow range, to achieve better correction.

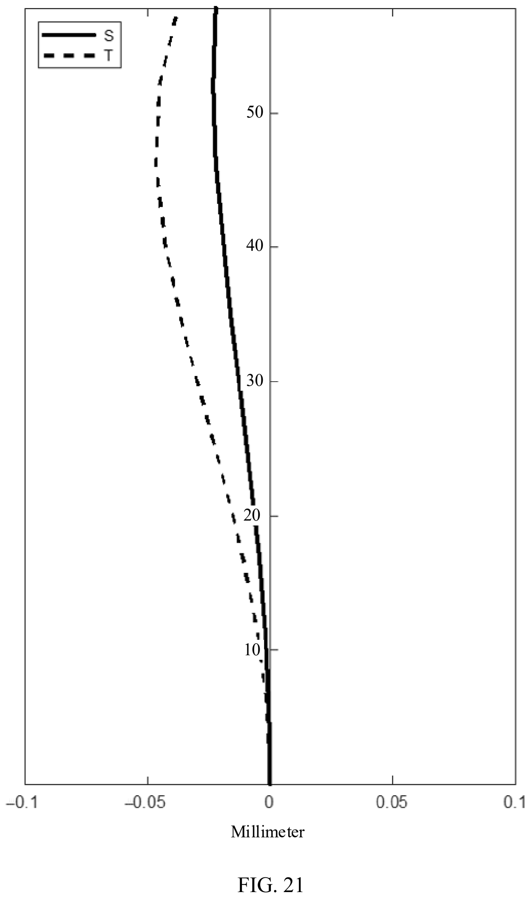

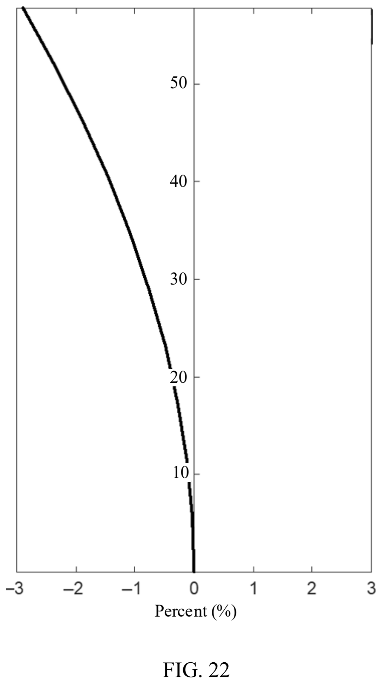

FIG. 21 is an astigmatic field curvature diagram of the lens in FIG. 19. FIG. 22 is a distortion diagram of the lens in FIG. 19. In FIG. 21, S represents a field curvature value of light with a wavelength of 550 nm on a meridian image plane, and T represents a field curvature value of light with a wavelength of 550 nm on a sagittal image plane. In FIG. 22, a solid line represents a distortion value of light with a center wavelength of 550 nm that passes through the lens 100 in this embodiment. With reference to FIG. 21 and FIG. 22, it can be learned that the lens 100 provided in this embodiment controls the field curvature and distortion to be within corresponding ranges, which can meet a use requirement.

In the descriptions of embodiments of this application, it should be noted that, unless otherwise clearly specified and limited, the term "mounting", "connection to", or "connection" should be understood in a broad sense, for example, may be a fixed connection, or may be an indirect connection through an intermediate medium, or may be an internal communication between two elements or an interaction relationship between two elements. in the art may understand specific meanings of the foregoing terms in embodiments of this application based on specific cases.

In embodiments of this application, it is implied that an apparatus or element in question needs to have a particular orientation, or needs to be constructed and operated in a particular orientation, and therefore cannot be construed as a limitation on embodiments of this application. In the descriptions of embodiments of this application, unless otherwise exactly and specifically ruled, "a plurality of" means two or more than two.

In the specification, claims, and accompanying drawings of embodiments of this application, the terms "first", "second", "third", "fourth", and so on (if existent) are intended to distinguish between similar objects but do not necessarily indicate a specific order or sequence. It may be understood that the data used in such a way is interchangeable in proper circumstances, so that embodiments of this application described herein can be implemented in sequences than the sequence illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The term "a plurality of" in this specification means two or more. The term "and/or" in this specification describes only an association relationship for describing associated objects and represents that three relationships may exist. For example, A and/or B may represent the following three cases: Only A exists, both A and B exist, and only B exists. In addition, a character "/" in this specification usually indicates an "or" relationship between associated objects, and a character "/" in a formula usually indicates a "division" relationship between the associated objects.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation the implementation processes of embodiments of this application.

## Claims

1. A lens, comprising a first lens group, an aperture stop, and a second lens group that are arranged from an image side to an object side, wherein
the first lens group comprises at least four lens elements, and in a direction from the image side to the object side, a first one, a second one, a third one, and a fourth one among the lens elements closest to the image side in the first lens group have a positive focal power, a negative focal power, a negative focal power, and a positive focal power; and
the second lens group comprises at least four lens elements, and in the direction from the image side to the object side, a first one, a second one, a third one, and a fourth one among the lens elements closest to the aperture stop in the second lens group have a negative focal power, a positive focal power, a positive focal power, and a positive focal power.

2. The lens according to claim 1, wherein the lens satisfies a relational expression 13.5 mm≤EFL≤14.5 mm, and EFL represents a focal length of the lens.

3. The lens according to claim 1 or 2, wherein the lens satisfies a relational expression 115 mm≤L≤150 mm, and in the direction from the image side to the object side, L represents a distance between an image and the lens element closest to the image side in the lens.

4. The lens according to any one of claims 1 to 3, wherein the first lens group satisfies a relational expression -58 mm≤EFL 1≤-40 mm, and EFL 1 represents a focal length of the first lens group.

5. The lens according to any one of claims 1 to 4, wherein the lens satisfies a relational expression 2≤R1/EFL≤5, R1 represents a curvature radius of an image-side surface of the lens element closest to the image side in the lens, and EFL represents the focal length of the lens.

6. The lens according to any one of claims 1 to 5, wherein the lens satisfies a relational expression 26 mm≤R1≤70 mm, and closest to the image side in the lensR1 represents the curvature radius of the image-side surface of the lens element that is in the lens and that is closest to the image side.

7. The lens according to any one of claims 1 to 6, wherein the second lens group satisfies a relational expression 19 mm≤EFL 2≤25 mm, and EFL 2 represents a focal length of the second lens group.

8. The lens according to any one of claims 1 to 7, wherein the lens satisfies a relational expression -10≤R2/EFL≤-3, R2 represents a curvature radius of an object-side surface of lens element closest to the object side in the lens, and EFL represents the focal length of the lens.

9. The lens according to any one of claims 1 to 8, wherein the lens satisfies a relational expression -140 mm≤R2≤-50 mm, and closest to the object side in the lensR2 represents the curvature radius of the object-side surface of the lens element that is in the lens and that is closest to the object side.

10. The lens according to any one of claims 1 to 9, wherein the lens satisfies a relational expression 28 mm≤BFL≤33 mm, and BFL represents a back focal length of the lens.

11. The lens according to any one of claims 1 to 10, wherein the first lens element assembly comprises a first lens element having a positive focal power, a second lens element having a negative focal power, a third lens element having a negative focal power, and a fourth lens element having a positive focal power that are arranged from the image side to the object side, the first lens element is closest to the image side, and the fourth lens element is closest to the aperture stop; and
the second lens element assembly comprises a fifth lens element having a negative focal power, a sixth lens element having a positive focal power, a seventh lens element having a positive focal power, and an eighth lens element having a positive focal power that are arranged from the image side to the object side, the fifth lens element is closest to the aperture stop, and the eighth lens element is closest to the object side.

12. A projection apparatus, comprising a display unit and the lens according to any one of claims 1 to 11, wherein the second lens group of the lens is close to the display unit; and
the display unit is configured to emit image light to the lens.

13. A display apparatus, comprising an imaging module and the projection apparatus according to claim 12, wherein
the imaging module generates a target image based on image light emitted by the projection apparatus.

14. A transportation means, comprising the display apparatus according to claim 13.

15. The transportation means according to claim 14, wherein the display apparatus is mounted in an instrument panel of the transportation means.

16. The transportation means according to claim 14 or 15, wherein the transportation means further comprises a windshield, image light emitted by the display apparatus is incident to the windshield, and the windshield reflects the image light to human eyes.
